# EUROPEAN PATENT APPLICATION

(11) **EP 4 431 797 A1**
(43) Date of publication of application: **18.09.2024**
(21) Application number: 24163683.6
(22) Date of filing: 14.03.2024
(51) Int. Cl.: F21V 15/01, F21V 21/10, F21V 31/00, F21V 21/116, F21W 131/10, F21Y 115/10

(54) **LED LIGHTING FIXTURE WITH FRAME MADE OF POLYMER MATERIAL AND REMOVABLE LIGHT SOURCE, WITH HIGH MECHANICAL RESISTANCE AND LOW ENVIRONMENTAL IMPACT**

(30) Priority: 14.03.2023 IT 202300004749
(71) Applicant: Niteko S.r.l., 74020 Montemesola (TA) (IT)
(72) Inventor: DEODATI, Alessandro, 73049 RUFFANO (LE) (IT); DE BERNARDO, Fabio, 74121 TARANTO (IT)
(74) Representative: Karaghiosoff, Giorgio Alessandro

(57) **Abstract**

The object of the invention is a LED lighting fixture comprising an optical unit (2), a cover (1) in which a coupling flange (38) is integrated, in which said optical unit (2) is removably fixed to the said coupling flange (38) and said cover (1) are made of polymeric material.

## Description

### BACKGROUND

The present invention concerns a LED lighting fixture with a frame made of polymeric material and a removable light source, characterized by high resistance to corrosion, high mechanical resistance, low specific weight and low environmental impact.

### STATE OF THE ART

The light source that in recent years is becoming more popular compared to traditional sources (filament, halogen cycle, fluorescent, discharge sources) is the HB (High Brightness) LED (Light Emitting Diode) source. In particular, in applications in outdoor environments, the latest generation high luminance light diode provides significantly superior performance, in both energy and qualitative terms (photometric and colorimetric), compared to traditional high pressure mercury vapor sources, at vapor metal halides, sodium vapor at high and low pressure.

Other advantages of this new technology are: high reliability, long life, high luminous efficiency, lower heat generation, reduced weight and size, robustness, drastic reduction in maintenance costs.

The attention towards respect for the environment and the continuous search for energy saving makes the LED source currently the best light source in the above-mentioned fields. Furthermore, as it is still a very young technology compared to others, it presents enormous margins for growth and development.

In fact, LEDs do not contain substances that are toxic and harmful to the health of humans, animals and the environment, unlike some types of traditional lamps which contain mercury and other dangerous substances.

An outdoor LED lighting fixture is mainly made up of:
- a supporting frame, which also characterizes the aesthetic shape of the appliance and includes the mechanical connections to the relevant supports;
- an optical unit, which may or may not be integrated with the supporting frame.

The optical group in turn includes:
a) a passive heat sink possibly including a plurality of fins - generally constituted, for example, by the frame of the lighting fixture itself or by an element independent of the supporting frame, conventionally made of aluminum alloy, subjected to anti-corrosion treatment and/or painting which is generally polyester powder;
b) a MCPCB substrate, i.e. Metal Core Printed Circuit Board, characterized by a main core made of aluminum or copper, metals with good thermal conductivity upon which the LEDs are soldered;
c) a possible arrangement for heat transfer between MCPCB and heat sink, such as a double-sided adhesive suitable for thermal transfer;
d) an optional system for directing the light, such as lenses and/or reflectors;
e) a mechanical protection system from water and dust, for example generally made up of a methacrylate or tempered glass screen, which is assembled on the heat sink using screws, preferably placing a suitable gasket between the latter;
f) a driver, such as an AC/DC converter, to electrically power the lighting fixture;
g) any remote or standalone electronic control devices connected to antennas that may be present on board the lighting fixture.

The optical unit, as mentioned, can be independent of the fixture frame or can be mechanically integrated with it and non-separable. In the first case, the optical unit, complete with electronic devices for the electrical power supply of the light source and for control, is fixed to the frame of the appliance preferably by means of a screwed connection and contained inside it. This is the case of lighting fixtures whose frame is made of turned aluminum or die-cast aluminum.

This configuration is also adopted by appliances whose frame is made of other types of material, even with low performance in terms of thermal conductivity, such as plastic ones.

The disadvantage of this type of configuration is that, from the point of view of thermal dissipation, the volume of air contained in the cover of the device, in which the optical unit is located, must be sufficient to trigger an internal convective motion adequate for the disposal of the heat generated by the light source. The advantage is given instead by the replaceability of the optical unit with a simple relamping operation which extends the average life of the appliance in case of failure or in case of need for a technological update, while reducing the environmental impact associated with the life of the appliance itself.

The case, however, that the optical unit is an integral part of the frame of the lighting fixture, is typical exclusively of lighting fixtures whose frame is made of die-cast aluminum and/or other thermally conductive material.

The advantage of this type of configuration is that, from the point of view of thermal dissipation, the thermal exchange of the heat generated by the light source is favored, first by conduction and then by convection, directly towards the environment outside the lamp. The advantage is that the volume of the device is not so strictly related to the thermal power to be dissipated and, therefore, with the same installed thermal power, it can be significantly smaller in size than in the case of the optical unit independent of the device frame.

The disadvantage, however, is given by the non-replaceability of the optical unit alone with a simple relamping operation and therefore, for greater economic convenience, more and more often, the replacement of the entire lighting fixture is preferred to the repair with consequent burden from the point of view of the environmental impact linked to the life cycle of the product in question.

In general, the construction materials, combined with the related transformation techniques for the production of new products, must be sustainable also according to the paradigm of a Circular economy. This sustainability is measured, for example, through the Life Cycle Assessment (LCA) or through the Environmental Product Declaration (EPD) which describes the environmental impacts linked to the production of a specific quantity of product.

The EPD Declaration, created on a voluntary basis, must be prepared by referring to the analysis of the product's life cycle based on an LCA (Life Cycle Assessment) study, which defines the consumption of resources (materials, water, energy) and impacts on the surrounding environment in the various phases of the product life cycle.

The phases at least considered range from the extraction of the raw materials, their transport to the production site and the production itself (it is called "from the cradle to the gate"), or up to the disposal of the product itself (it is said "from the cradle to the grave") . It has been calculated that by replacing the materials in the body of the appliance with materials coming from renewable resources and/or with recycled and/or recovered materials, in the manufacturing of a product, the relative impact on the climate of the body of the appliance is reduced on average by about 80%.

At the state of the art, as mentioned, the materials used for the construction of the frames of the lighting fixtures are mainly aluminum or polymeric material.

The sustainability of materials such as aluminum, the most used in the manufacture of outdoor LED lamp frames, in terms for example of LCA and EPD (considering "from cradle to grave" as phases of the product life cycle) is also influenced by their resistance to corrosion. This corrosion phenomenon is caused and/or triggered by the polluting agents and/or saline atmospheres characterizing the environment in which the lighting fixture is installed and occurs when paints or surface passivations are degraded due to aging due to exposure to sunlight and atmospheric agents. Being able to reduce the effects of corrosion on lighting fixtures, if not even eliminating the root causes, is essential both for economic savings for public administrations and for containing the environmental impact linked to the production cycle of the fixture itself.

Inherently, the life of an LED appliance is also influenced by its thermal management and therefore by the materials and design choices involved.

However, the use of aluminum as a construction material for frames entails the following advantages:
a) high thermal conductivity;
b) 100% recyclability of the material. The recovered aluminum is of identical quality to the original one;
c) high dimensional precision of the parts made by die-cast aluminum;
d) high dimensional stability.

The disadvantages of aluminum include:
1. electrical conductivity of the structure in contact with the outside and risk of electrocution in the case of appliances not made with double electrical insulation and/or adequate earth resistance and/or regularly maintained;
2. high costs of the molds for the production of parts using die casting technology;
3. in the sole case of manufacturing the frames by turning from sheet metal, there are on average high costs of the details due to the manufacturing process and the impossibility of obtaining structural ribs inside the pieces;
4. high cost of assembling the individual details that make up frames with more articulated, complex final geometries and made up of multiple pieces;
5. formation of gaps between pieces joined mechanically by screwed and/or bolted connection. The assembly phases of the various metal components that generally make up a lighting fixture such as street furniture, however, imply the formation of gaps at joints, which favor and/or accelerate the triggering of interstitial corrosion phenomena;
6. high environmental impact resulting from the need to adopt anti-corrosive and impact-resistant chemical treatments, preparatory to the subsequent painting phases of the printed products;
7. need for painting to give the desired color and/or increase protection against corrosive agents;
8. compromise of the aesthetic appearance in the event of impacts simply due to pre-installation handling and/or related to transport;
9. compromise of the aesthetic appearance in the case of installation on board the appliances of devices equipped with an antenna, which would be external to the frame itself for reasons related to its optimal functioning;
10. packaging with more impact from an environmental point of view compared to similar devices made of polymeric material;
11. harmful emissions associated with the primary and secondary production phase of the raw material. As regards primary production, in the electrolysis phase there are high emissions of CO₂ and PAHs (polycyclic aromatic hydrocarbons) . Secondary production, on the other hand, is characterized by the emission of heavy metals since a portion of the metals present in melted scrap inevitably ends up in the process fumes. As regards the pollutants common to both productions, it can be said that primary production is always more polluting than secondary production, except for carbon monoxide and for some substances which are not emitted in primary production such as antimony, cadmium, chlorides, dioxins, vanadium and hexavalent chromium;
12. corrosion of the appliance especially when exposed to aggressive environments. Although the LED source is still efficient, after a few years from its installation, in the presence of the phenomenon of corrosion of the material constituting the frame of the appliance, there would be a compromise of its aesthetic appearance and/or deterioration of its mechanical-structural characteristics which would impose in any case its replacement, with consequent increase in economic costs and related environmental damage due to its replacement.

The most important environmental factors influencing, in particular, corrosion atmospheric of lighting fixtures made of metallic material, are: Temperature, Humidity, Chlorides and Sulfur Dioxide. In outdoor lighting fixtures, despite the protection offered by chemical pre-treatments and polyester powder painting, the corrosive phenomenon of main interest can be considered corrosion under organic coating (delamination, blistering), of which filiform corrosion can be considered a special case. It is evident that, in such circumstances, maximum resistance to corrosion can be guaranteed by organic coatings with the maximum ability to develop barrier protection against aggressive agents (water, oxygen, specific ions) and capable of ensuring effective adhesion to the metal substrate even in conditions of high humidity.

In fact, in the case of organic coatings (especially paints and varnishes) the major problem is linked to the intrinsic porosity of these coatings: in the long run the oxygen from the atmosphere and the humidity will penetrate by diffusion and will attack the metallic mass at the metal/coating interface. The consequent effect is the typical appearance of bubbles or vesicles on the surface of the painted layer (blistering): when oxygen and atmospheric humidity cause degradation of the metal alloy, corrosion products with high specific volume, such as to create swelling of the paint layer, will form at the interface. Therefore, given the same type of varnish or paint used, these coatings offer adequate protection in relation to the thickness deposited on the material to be protected: the greater the thickness of the paint, the longer it will take for the harmful species present in the atmosphere to spread.

In the hypothesis of instead using the polymer as a material for the manufacture of the frames of the lighting fixtures, in order to avoid the occurrence of the corrosion phenomenon, there are different molding methodologies. The main ones are injection moulding, blow moulding, thermoforming, extrusion and roto-moulding. Due to the intrinsic limitations of other technologies, the state of the art includes mostly lighting fixtures made of plastic material, for functional outdoor use and/or street furniture, characterized by an external frame made using injection molding technology.

The advantages of using plastic combined with injection molding technology are:
1) prevention of the risk of electrocution in the event of electrical failure of the appliance itself as the material in contact with the outside is electrically insulating;
2) immunity to corrosion as the corrosion phenomenon is specific to metallic materials;
3) no need for the painting process or preparatory processes for painting;
4) transparency to radio waves and therefore the possibility of installing remote control devices including the relevant antennas inside the frame of the lighting fixture, with advantages from the final aesthetic point of view of the technical solution;
5) possibility of using 100% recyclable and/or plant-based materials;
6) economic advantage in recycling plastic materials compared to aluminum. Melting and remelting metals requires much more time and energy than recycling thermoplastic materials;
7) advantage in terms of finish compared to the uniform appearance characteristic of metals. Injection molded plastics can be produced with virtually any color or texture imaginable;
8) advantageous cost. In addition to reducing shipping and assembly costs, the manufacturing process for plastic parts is typically much cheaper than that for metal parts. Injection molding of plastics requires a much shorter cycle time than metalworking, making them generally easier and cheaper to process.
9) impact resistance without compromising the aesthetic appearance;
10) the possibility of tolerating greater elongations under load ranging between 1 - 4%, even if these levels can lead to non-linear deformations with the load and, therefore, possible geometric distortions of the piece.

The disadvantages of a device whose frame is made of polymeric material, made by plastic injection, are instead:
1) reduced durability compared to aluminum, especially when using recycled material. Contrary to what happens with metals, which retain their characteristics indefinitely regardless of the number of recycles, polymers undergo degradation processes both during processing and during their use. Heat, mechanical and electrical stress and ultraviolet radiation can profoundly change the structure, composition and morphology of the polymer, causing the splitting of the macromolecular chains and worsening almost all of its characteristics. Ultimately, with each processing operation in the molten state or with external use, the properties of the polymer decay. Since the secondary raw material, possibly used for the manufacture of the products, must be in the form of pellets or granules, it must therefore be transformed through a thermal-chemical process, and cannot be obtained by simple mechanical shredding of clean industrial waste or post-consumer.
   However, to maintain high mechanical properties, it is possible to mix recycled polymers with the same type of virgin polymers. The percentage of regenerated polymer is generally relatively low and does not exceed 25-30%. This means that already with the combination of mechanical recycling and the addition of a certain quantity of virgin polymers, it is possible to reduce the consumption of fossil plastics by 25%-30%;
2) the injection, due to the high flow speeds inside the mold, especially in the case of complex shapes and not high thicknesses, easily gives rise to highly tensioned products whose fibers are oriented. Sometimes the artefacts tend to deform over time, especially following even mild heating. This, together with the high cost of molding machinery and the need for continuous control over the process, is one of the major disadvantages of injection molding;
3) anisotropy determined by the flow of molten resin into the injection mold;
4) in a plastic frame, made using any technology, there is always the disadvantage of a possible formation of electrostatic charges which, if not appropriately dissipated, accumulating in a non-uniform manner on the surface of the appliance can lead to extremely high electrical discharges harmful to electronic components;
5) high number of molds for complex and/or undercut geometries;
6) high cost of moulds;
7) production runs in the order of thousands of pieces, therefore the technology is not economically advantageous for small series and/or for the production of limited series;
8) high cost of assembling the individual details that make up the external supporting frame;
9) low wall thicknesses which favor the acceleration of the degradation phenomena of aging and consequent embrittlement of plastic products under the action of UV rays;
10) unacceptable stress concentrations may occur in mechanical connections and joints due to thermal expansion;
11) impossibility of directly using flakes of recycled material coming from the shredding and/or grinding process of primary or secondary mechanical recycling.

As mentioned, both the die-casting and plastic injection molding technologies require high investments in terms of molding equipment, against low costs of the molded parts: this implies that the use of these production technologies is justified only for batches of production in the order of thousands of pieces. This factor disadvantages all those projects, in the field of design applied to urban lighting, aimed at better characterizing the places, often of particular historical and/or architectural value, which are the subject of renovation work on public lighting systems. For this type of intervention, very often a limited number of pieces are required, in the order of tens or hundreds, and/or limited series of devices with large dimensions compared to that of the electronic devices contained therein.

A technology that is economically suitable for the production of small series of products and characterized by low environmental impact, but which due to intrinsic limitations has not taken ground in the manufacturing of functional outdoor lighting fixtures and/or powerful urban furnishings, is rotational molding. Rotational molding is a technological process that allows the production of hollow bodies in a single piece without the need for welding. This technology allows us to obtain pieces without internal tensions and with uniform thickness. Large items with very complicated contours can be printed in the most varied colors and materials. It is a technique typically used for the production of hollow bodies, even of considerable dimensions and with high thicknesses.

The best performing material also in terms of recyclability and which can be printed with this technology is polyethylene. Some main differences that characterize rotational molding compared to the blow molding or injection molding process are:
a) the use of polymer powder instead of granules;
b) the molten material is inside a closed mold while in injection molding the material is introduced under pressure inside the mold;
c) the product is removed from the mold theoretically without generating any stress;
d) the wall thicknesses are higher than those obtainable with other molding technologies.

With rotary molding it is also possible to create mold prototypes for experiments at low costs (the production of molds is less expensive than those used with high-pressure molding technologies, such as injection and blow molding). Production is very flexible: objects with recesses or complicated profiles and with good surface definition can be produced, as well as double-layered objects; it is possible to simultaneously print identical or similar products. Furthermore, it is often possible to introduce plastic or metal inserts as integral parts of the product.

It is also possible to print polyethylene obtained from post-consumer polyethylene or clean processing waste. Said recycled polyethylene, in fact, can always be obtained by processing recovered polyethylene, through the thermal extrusion process, in order to obtain a material that is uniform in size and colour. In fact, this last phase returns a product in granules (generally similar to lentils, called pellets) similar in size to that of a virgin polymer and therefore more easily manageable in a production process. Extrusion also provides the opportunity to add additives and/or fillers and/or colorants to the recycled material, which improve its characteristics for the type of applications for which the material is intended.

As regards the robustness of an outdoor LED appliance from an electrical point of view, at the state of the art the analysis of the types of reported faults has highlighted that, in most cases, the origin of the malfunctions is mainly due to overvoltages that affect the device itself. Actually, the phenomenon is not new but, until now, with the technologies for the use of discharge lamps (mercury vapor, high pressure sodium and halide lamps) it has never been a critical element. In fact, mains overvoltages stress the internal circuits and insulation. The latter were already well sized to withstand the voltage pulses for triggering the lamp (up to 5kV) and therefore the devices also tolerated mains disturbances well. On the other hand, LEDs, being made of semiconductors, are particularly sensitive to these phenomena. In particular, the PN junction of the chip cannot withstand the reverse voltages that occur at its ends.

Network overvoltages can be of an atmospheric nature (electrostatic phenomena of atmospheric origin) or of a plant origins that is overvoltages due to the insertion or disconnection of loads on the line.

In general, two ways can be defined in which overvoltages can occur at the appliance:
- **Common mode overvoltages** : the overvoltage occurs between the power conductors and the earth or mass of the appliance. In class II systems and products, the conductive casing of the devices, despite being an element isolated from the circuits, could easily be in contact with the pole or support and therefore have a reference to earth.
- **Differential mode overvoltage** : the overvoltage occurs between conductors of different polarity (between phase and neutral power supply).

The difficulty in defining limits and adequate protections lies in the very nature of the phenomenon. Unfortunately, as mentioned, these phenomena are occasional and therefore the tension levels are not easily measurable and predictable. In order to define adequate voltage levels it is necessary to refer to estimates which, based on experience, define their amplitude.

Electrostatic phenomena (ESD), in particular, can be generated by the action of wind, clouds or the surrounding environment, which charge the appliance's casing with electrostatic energy. This phenomenon is more frequent when the appliance housing is metallic and without a reference to the earth, or applications consisting for example of class II appliances installed on fiberglass poles or suspended with ropes made of insulating material, or of class II appliances with a frame made of electrically insulating material and support and optical unit made of metallic material and electrically insulated from each other. The action of the wind or clouds electrostatically charges the body of the device and/or the optical unit which could take a very high potential compared to the ground. Since the power supply system of the lighting fixture is anchored to the earth potential (the TT and TN distribution systems require the connection of the neutral conductor to earth in the transformation cabin), a potential difference is created between the body of the appliance and its internal circuits. This potential difference can overcome the dielectric strength of the internal insulation causing a discharge towards the neutral conductor in the following order: metal body - heat sink - LED circuits - power supply - neutral; in this case the fault affects all the electrical components mentioned.

In order to guarantee adequate protection it is therefore necessary to implement protective measures against these phenomena. With the circuits of LED appliances, it has been noted that often delegating adequate protection to the insulation (as happened for traditional sources) may not be sufficient. In fact, the inevitable presence of parasitic capacitances can induce harmful overloads on components and on LEDs in particular. It is therefore necessary to implement systems that prevent network transients from reaching the electronic components and stressing them. To do this, various systems are used which, however, can present problems and also compromise the safety of the products.

### Protections integrated into the electronic power supply (driver).

Electronic power supplies are normally equipped with an input filter to protect the lighting fixture from voltage pulses. These filters can be correctly dimensioned to withstand high voltage levels in both common mode and differential mode. The only limitation is in class II products, where the leakage currents towards the casing must not exceed the safety limits of the CEI EN 60598-1 standard. This limits the possibility of using filtering capacitors on the supply side with consequent limitation of protection.

### Secondary circuit connections to the body of the appliance.

One of the ways to avoid stress on the LEDs is to create circuit conditions that keep the conductive casing of the devices (heat sinks, external case, etc.) equipotential to the internal circuits.

The CEI EN 60598-1 lighting fixture standard includes the insulation requirements between the circuits and the possibility of using protection impedances (capacitors or resistors to be connected between insulated parts of the fixture - e.g. between the LED circuit and the metal ground) to be able to electrically connect isolated parts.

### Use of SPD (surge protection device)

Another protection against surges is offered by the surge protector or SPD (Surge Protection Device). The use of this SPD has become widespread in recent years. The SPD is characterized by its own internal impedance. This device responds to overvoltages by decreasing its impedance: the arising of an overvoltage causes the impedance at the ends of the box to quickly drop to 0 Ω, allowing the current associated with the overvoltage to drain through the SPD itself. The higher the overvoltage, the lower the impedance, and the greater the current drained. Drainage of the overcurrent occurs by maintaining the voltage across the SPD constant. If this voltage is compatible with the immunity and insulation level of the equipment, the equipment will not be damaged. In the case of common mode voltage pulses they reduce their impedance between the phases and the earth circuit.

The aim of the present invention is therefore to create a lighting device whose frame is made of polymeric material capable of overcoming the drawbacks of the known art as highlighted above through the development of new solutions.

Within the scope of this task, an object of the invention is to create a manufacturing system for lighting devices which allows to obtain a better performance of the LED lighting device; the same device is in fact characterized by a self-supporting monocoque frame in roto-molded polymeric material, with integrated mechanical attachment, mechanical reinforcement core and integrated adaptation flange to allow the mechanical coupling, preferably using fixing screws, of an independent hermetic optical group, whose supporting structure is preferably made of die-cast aluminum or thermo-conductive plastic material, removable and universal for the same family of products.

The consequence of the above allows to achieve an important object of the invention which is to obtain a supporting frame and therefore a light fixture, with a weight that is significantly lower than traditional aluminum fixtures made by means of an aluminum die-casting process. This feature allows the use of brackets and/or support poles that are much less robust, and therefore much less expensive, than those relating to lamps that use traditional aluminum frames.

Furthermore, the appliance object of the present invention is not subjected to degradation due to corrosion phenomena due to exposure to atmospheric agents and solar radiation for the entire lifespan of the LED sources applied to it.

The consequence of the above allows to achieve another aim of the invention which is to be able to create lighting fixtures with a supporting structure made up of a frame in polymeric material whose thickness can be, for the same mould, increased at will and/or case by case and/or decided product by product. This leads to another advantage which is being able to obtain lighting fixtures whose frame is made of polymeric material, with the highest mechanical resistance expected from current industry standards. Said mechanical resistance allows to achieve a further purpose of the invention which is to be able to create packaging preferably in paper or cardboard, which has much less impact from an environmental point of view compared to those used for lamps whose frame is made of aluminum or by injection plastic.

A further purpose of the invention is to obtain a lighting fixture with an electrically insulating frame and at the same time equipped with a system capable of avoiding stresses on the LEDs due to overvoltages from electrostatic discharges and with the aim of creating circuit conditions that maintain the conductive casing of the optical group (heat sinks, glass bead frame, metal connection/attachment system, etc.) equipotential with respect to the internal circuits.

The consequence of the above is to prevent the electrostatic charges accumulated non-uniformly on the polymer surface of the device from generating electrical discharges that are harmful to the electronic components. Said electrostatic charges are, therefore, made to flow towards the mass, or earth, i.e. the lowest electric potential represented, in fact, by the metal support of the lighting device.

A further consequence of the above allows to achieve another object of the invention which is to obtain a lighting device whose electrically insulating cover guarantees additional protection against the risk of electrocution even in the case of devices without double electrical insulation and /or adequate earth resistance values.
Furthermore, according to the invention, the invention also provides a pole attachment connection, preferably metallic and preferably screwed and/or co-molded in the polymeric material, to allow its application to fixed support structures and/or mounting brackets.

Furthermore, the invention also provides a preferably metallic flange and preferably screwed or co-molded into the polymeric material to overcome the problem of dimensional shrinkage of the roto-molded cover in thermoplastic material caused by volumetric contraction, during and after processing (post-shrinkage). The presence of said flange ensures the dimensional stability of the distances between the fixing holes to allow the mechanical connection, preferably by means of screws, of the optical unit, which is thus easily removable. A consequence of the above is being able to repair and/or update and/or regenerate the optical unit and/or upgrade it, thus extending the overall life of the object of the present invention and, at the same time, containing its relative environmental impact, with consequent positive result in terms of environmental footprint assessment.

The consequence of the above is also being able to create a family of products whose self-supporting covers, which differ from each other in design, share the same technical solutions or the same flanges to accommodate the same type of optical unit and the same type of mechanical attachments to fixed support structures and/or mounting brackets. This construction configuration makes it possible to contain the production costs linked to the design and engineering for each new product of the same family by having to manufacture and design only the mould, each time, for the plastic part of the cover only, sharing with the other products of the same family, the same design and/or technical solutions relating to the mechanical attachments and seats for coupling the same optical group. This entails another advantage in terms of economic investments both on the molds and on the stocks to be managed of the optical group frames, having only one type per product family.

This leads to another advantage which is being able to bear certification costs for each product, as required by sector regulations, which are much lower than those foreseen for conventional manufacturing techniques, being able to certify every single product of the same family of products with a moderate economic surplus, starting from the certification obtained for the product with limited air volume conditions, more restrictive than other products of the same family. This is possible since each product of the same family to which the present invention belongs shares the same optical unit, the same construction type and the same electrically insulating construction material for the manufacture of the cover.

The consequence of the above is to be able to produce small series and/or limited series of products with an extremely personalized design at affordable costs and for which the related certification costs with respect to the regulations envisaged for the product covered by this invention are also accessible.

An object of the present invention is to be able to manufacture at low costs, compared to other molding technologies, frames of lighting fixtures with large dimensions compared to those present in the state of the art, and with an internal volume such as to allow the thermal disposal of the heat generated by the light source by means of the convective motions triggered, despite not using construction materials for the frame that are thermally conductive and/or forced air cooling systems. This leads to another advantage which is to prevent the influence of the temperature outside the device itself from significantly compromising the thermal dissipation performance of the optical unit.

The use of the polymer for the construction of the supporting frame of the lighting fixture allows pursuing another aim of the invention which is to be able to integrate within the covers any devices for communicating data or information in real time for all the services of the smart cities. The polymer used, in fact, guarantees transparency to radio waves and therefore the possibility of installing remote control devices including the relevant antennas inside the cover of the lighting device, with advantages from the final aesthetic point of view of the technical solution of the present invention.

A further scope of the invention is to allow the creation of lighting fixtures with a supporting structure made up of a frame in roto-molded polymeric material, while the frame constituting the optical group dedicated to heat dissipation can be preferably made of thermo-conductive thermoplastic compound to replace aluminum. A consequence of the above is to be able to produce the dissipating part, compared to the alloy die casting process metallic, with lower raw material costs, low product tolerances, process costs lower, electrical insulation, greater possibilities of finishing, longer mold life, waste lower process and higher weight of the parts produced contents. A further consequence of the above allows achieving another aim of the invention which is to reduce pollution and, in general, the ecological impact on the environment also for the manufacture of the element dedicated to thermal dissipation, thanks to the use of completely recyclable plastics and the lower energy used in the plastic injection process.
A further purpose of the invention is to allow the creation of lighting fixtures with a supporting structure consisting of a frame made of polymeric material reinforced at the joint and/or attachment points to the support elements, with preferably metallic mechanical elements, in order to guarantee a higher and long-lasting mechanical resistance to external stresses such as gusts of wind and/or mechanical degradation and/or aging due to UV rays: in this way the object of the following invention does not undergo significant structural variations and/or alterations due to the action of atmospheric agents and/or solar radiation for the entire lifespan of the LED sources applied to it.

A further purpose of the invention is to allow the creation of hermetic lighting fixtures with internal pressure equalization systems in order to prevent changes in pressure and/or temperature inside the cover, under operating conditions, from excessively stressing the sealing gaskets with consequent danger of condensation forming on and/or in the electrical and electronic devices of the subject of the present invention.

The following detailed description is given as an illustration and examples of some embodiments of the present invention and is not intended to limit the scope of the claims in any way, the spirit and scope of the present invention being solely limited by the claims set forth below.

The specific terms used in the description and claims have the following meaning:
- MCPCB: **"Metal Core Printed Circuit Board"** which identifies a new type of printed circuit, created to dissipate the considerable heat produced by power LEDs. Characterized by a main core made of aluminum or copper, metals with good thermal conductivity.
- The term co-molding indicates a process which embeds the threaded inserts and/or metal flanges equipped in turn with threaded inserts and/or fixing holes, in the molten plastic material and has the effect of strengthening the mechanical properties of the pieces made of plastic and their ability to be fixed to further mechanical parts, especially in the context of repeated installations.
- The term pole attachment connection indicates a cylindrical metal detail, capable of creating the connection to the lighting fixture in the lower part and in the upper part the connection to support structures such as poles and/or shelves and/or suspended catenaries.
- The term EQUI terminal indicates the electrical connection on board the power driver provided for the electrical connection of the driver itself to the metallic and/or electrically conductive parts constituting the lighting fixture. This connection thus ensures the equipotential connection between electronic circuits and metal masses to increase the immunity of the lighting fixture to electrical overvoltages.
- The term flakes refers to the flakes obtained by shredding and/or grinding plastic materials into small parts, following the selection phase based on the type of polymer, during primary or secondary mechanical recycling.
- The term cover or covering refers to a shell made of thermoplastic material, preferably made by rotomoulding, suitable for housing the optical unit using appropriate fastening elements and/or flanges, and any fittings for attachment to the external support structures.
- The Melt Flow Index or Melt Index or Fluidity Index (abbreviated as MFI) is the index of the ease of flow of a molten polymer; its measurement is carried out by loading the molten polymer at a certain temperature into a heated cylinder to which a small cylinder (diameter 2.095 mm and length 8 mm) is fixed, which exerts a constant force and makes the polymer flow through a capillary; the mass (expressed in grams) of polymer released in 10 minutes corresponds to the value of the Melt Flow Index.
The greater the mass of leaked material, the greater the Melt Flow Index and the lower the viscosity of the polymer. The operating temperature and the mass of the cylinder are set by the standards depending on the type of material you want to test.

### SHORT DESCRIPTION OF THE FIGURES

The present invention is, therefore, now described, by way of illustration but not of limitation, according to its preferred but not exclusive embodiments, with particular reference to the figures of the attached drawings, wherein:
- figure **(1a****)** illustrates an external side view of a possible embodiment of the object of the present invention;
- figure **(1b****)** illustrates an external view from below of a possible embodiment of the object of the present invention;
- the **figures (1c**, 1d) illustrate perspective views of a possible embodiment of the object of the present invention;
- the **figures (2a, 2b, 2c, 2d, 2e, 2f****)** illustrate overall external views of a possible implementation of the optical unit of the present invention;
- figures **(2g**, 2h) represent cross-section views, with reference to **figure (2a****),** of a possible configuration of the optical unit of the present invention;
- figure **(2i****)** represents the detail of the cross section of the LED light source installed in the optical unit of the present invention;
- figure **(2m****)** represents the detail of the cross section of the glass closing and sealing system of the optical unit of the present invention;
- the **figures (3a, 3b, 3c****,)** illustrate overall external views of a possible embodiment of the frame of the present invention;
- figure **(3d****)** represents a cross section of the frame of the present invention;
- figure **(3e****)** represents the detail of the cross section of the seat of the anti-condensation valve of the frame of the present invention;
- figure **(3f****)** represents the exploded sectional view of the frame of the present invention;
- the **figures (3g**, 3h) represent sectional views of the detail relating to the coupling by co-molding between the cover and the coupling flange;
- figure (4a.1) represents a trimetric view of the co-molding coupling flange of the present invention;
- figure (4a.2) represents a trimetric view of the coupling flange for mechanical fixing to the cover of the present invention;
- figure (4a.3) represents an exploded view relating to the coupling of the coupling flange for mechanical fixing to the cover of the present invention;
- figure (4a.4) represents a trimetric view of the cover complete with coupling flange for mechanical fixing;
- figure **(4b****)** represents the plan view of the coupling flange for co-molding;
- figure **(4c****)** represents the cross section of the flange in **figure (4b****);**
- **figures (4e**, 4f) represent the details of the cross section of the coupling flange for co-moulding;
- figure **(5d****)** represents a trimetric view of the pole connection fitting suitable for co-molding on plastic materials;
- the **figures (5a**, 5b) represent the exploded sectional views of the co-molding coupling of the pole attachment connection to the cover of the present invention;
- figure **(5c****)** represents a sectional view of the pole connection co-molded with the cover of the present invention;
- figure **(6d****)** represents a trimetric view of the pole connection fitting suitable for screw fixing;
- figure **(6c****)** represents the cross-sectional view of the pole attachment connection screwed to the cover of the present invention;
- figure **(6b****)** represents a trimetric view of the pole attachment connection screwed to the cover of the present invention;
- figure **(6a****)** illustrates an exploded trimetric view of a possible composition for screwing the pole attachment connection to the cover of the present invention;
- figure **(7a****)** illustrates a trimetric view of the frame complete with spring disc of the present invention;
- figure **(7b****)** represents the view along a sectional plane highlighting the detail relating to the coupling of the spring disc to the pole attachment connection;
- figure (7c.1) represents the cross-sectional view of the detail relating to the coupling of the spring disc to the co-molded pole attachment fitting;
- figure (7c.2) represents the cross-section view of the detail relating to the coupling of the spring disc to the pole attachment fitting suitable for screw fixing;
- figure (7d) illustrates the detail relating to the flap of the spring disc of the present invention;
- figure (7e) illustrates the detail relating to the flap of the spring disc shaped with respect to the cover of the present invention;
- figure **(7f****)** illustrates the detail relating to the metallic support for the safety cable of the present invention;
- figure **(7g****)** illustrates the detail relating to the mechanical and equipotential retention kit of the present invention;
- figure **(8a****)** represents the plan view of the spring disc of the present invention;
- figure **(8b****)** represents the side view of the spring disc of the present invention;
- figure **(8c****)** represents the trimetric view of the spring disc of the present invention;
- figures **(9a**, 9b) illustrate the exploded trimetric views of a possible composition of the object of the present invention;
- figure **(10a****)** illustrates a side view of the final configuration of the present invention;
- figure **(10b****)** illustrates an exploded trimetric view of only the fixing elements of the optical unit of the present invention;
- figure **(10c****)** illustrates a trimetric view of the present invention in the configuration with the optical unit removed from the frame and with evidence of the relative mechanical and electrical connection systems;
- the **figures (11a, 11b****,** **11c, 11e****)** represent the views and sections of a possible configuration of the present invention with evidence of the electrical connection and mechanical retention systems;
- figure **(11d****)** represents the cross sectional detail of the anti-condensation valve coupled with the relative insert co-molded with the cover of the present invention;
- figure **(11f****)** represents the cross sectional detail of the mechanical system for attaching the optical unit to the flange co-molded with the cover of the present invention;
- figures **(12a**, 12b) represent the views relating to the installation configuration of the object of the present invention with respect to an external mechanical support element;
- figure **(12c****)** illustrates the suspended application of the object of the present invention with respect to a pole equipped with an arm;
- figure **(12d****)** illustrates the exploded section relating to the threaded coupling between the object of the present invention and the support arm;
- figure **(12e****)** represents a side view of the object of the present invention complete with relative attachment for steel cable for installation on a tensioned line.

### DETAILED DESCRIPTION OF THE FIGURES

In **figure (1c****),** it can be seen the specific fundamental elements characteristic of the present invention **(0)** which are, first of all, the **cover (1)** made of polymeric material and preferably by rotomoulding, connected both to the **pole connection fitting (3),** better detailed in the **figures (5d, 6d)** and both the **optical unit (2),** better detailed in the **figures (2e**, 2f).

The **figures (2a, 2b, 2c, 2d, 2e, 2f****)** illustrate overall external views of a possible realization of the **optical unit (2)** of the present invention, in which the fundamental components are visible, such as the **glass bead frame (4)** fixed by means of the **fixing screws (19),** better detailed in **figure (2m****),** to the **heat sink (5).** This **glass bead frame (4)** is preferably made of die-cast aluminum or synthetic resin, while the **heat sink (5)** is made with preferably finned geometry, in thermally conductive material, such as aluminum or copper or thermally conductive polymers, in order to dispose of the heat generated by the **LED source (8),** better detailed in **figure (2i****),** thermally connected to the **heat sink (5)** via the **MCPCB (9)** located in the internal area of said **heat sink (5).** On the finned area of said **heat sink (5)** there is a portion of flat surface where the **cable gland (15)** is housed, better described in **figure (2f****),** and a portion of flat surface where it is housed at least one **anti-condensation valve (16),** better described in **figure (2h****),** which has the purpose of rapidly equalizing the pressure inside the hermetic compartment obtained between the **heat sink (5)** and the **glass (6)** equipped with the relative **shaped gasket (10),** better detailed in the **figure (2m****),** preventing the formation of the phenomenon of condensation in said compartment and at the same time the entry of water and contaminants.

In a preferred embodiment, the **EQUI terminal (17g)** of the **driver (12)** is electrically connected by means of the **electric cable (17h)**, better detailed in **figure (2c****),** to the **metal plate (11) supporting the electronic** via the **screw (17i).** The electrical, as well as mechanical, connection between the **plate (11)** and the **heat sink (5),** is ensured by the **screws (17f),** as better detailed in **figure (2b****),** while the electrical, as well as mechanical, connection between the **heat sink (5)** and the **glass bead frame (4),** it is secured by the **screws (19),** better detailed in **the** **figure (2m****).**

The **metal plate (11)** is connected via the **screw (17d),** better detailed in **figure (2f****),** to the **equipotential connector (17a)** via the **electric cable (17c)** equipped with appropriate terminals. The **metal plate (11)** and the **heat sink (5)** are thus electrically connected to the **connector (17a)** in the manner better described in **figure (2g****).** The **connector (17a)** also has the purpose of implementing the electrical connection with the **pole connection fitting (3),** or alternatively (**3x)**, whenever it is connected to the **equipotential connector (17b)** better described in the **figure (10c****).**

The **power connector (14a)** is housed on said **plate (11),** as detailed in **figure (2c****),** electrically connected to the input of the **surge protector (13)** which has the task of completing, connected upstream of the **driver (12),** the overall immunity of the lighting fixture **(0),** creating a much more robust protection than that intrinsically offered by the **driver (12),** against the effects mainly of lightning and overvoltages coming from the electricity supply network. The output of said **surge protector (13)** is electrically connected to the power supply terminals of the **power driver (12);** said **driver (12)** has the main purpose of transforming the alternating current, which arrives from the electrical network, into direct current and at an adequate voltage that the **LED (8) chips** are designed to manage.

The task of the **power connector (14a)** is to provide the electrical power to the **optical unit (2)** whenever it is electrically connected to the **electrical power connector (14b)** better described in **figure (10c****).**

The output of the **power driver (12)** is connected to the **electronic circuits (9)** by means of the power cables passing through the **cable gland (15),** visible in **the** **figure (2h****),** at the entrance to the compartment containing the **LED (8)** chips.

On the **metal plate (11)** there is also a **slot (11a),** better visible in **figure (2c****),** whose function is to represent the seat for anchoring the **metal hook (34b)**, equipped with closure by means of a lever spring, better described in the **figure (7g****).**

The **figures (2g**, 2h) represent cross-section views of a possible configuration of the optical unit of the present invention in which the **glass (6)** is visible, suitably shaped and equipped with a suitable **shaped gasket (10),** inserted between the **glass bead frame (4)** and the **heat sink (5).** The sealing of the **optical group (2**)**,** in this configuration, is guaranteed by means of the **screws (19)** which have the function of both mechanically hooking the **glass bead frame (4)** to the **heat sink (5)** and of carrying out the compression of the **gasket of the glass (10).** In fact, said **screws (19),** once inserted through the **through holes (25)** made on the **heat sink (5),** are screwed into the **threaded holes (26),** better detailed in the **figure (2m****),** made on the **glass bead frame (4).** In a possible embodiment of the present invention, one of the fixing screws between the **glass bead frame (4)** and the **heat sink (5)** can be made of a **screw (19b),** better detailed in **figure (2h****),** characterized by a length such to ensure the fixing of the **glass retaining frame (4)** on the heat **sink (5) by placing a cylindrical spacer (19c)** between the head of said **screw (19b**) and the heat **sink (5).** The head of said **screw (19b)** preferably has a diameter smaller than or equal to that which characterizes the external diameter of the **cylindrical spacer (19c).** The function of said **spacer (19c)** is to guarantee a unique and unequivocal orientation of the **optical unit (2)** with respect to the **frame (21)** when the **optical unit (2)** is mechanically coupled to the **coupling flange (38)** of the **frame (21).** The orientation of the **optical unit (2)** with respect to the **frame (21)** is therefore guaranteed only by centering the **spacer (19c)** with the **centering and/or abutment hole (38c)** present on the **coupling flange** (38) present on the **frame (21),** and better described in figure (4a.1), or alternatively in the **hole (38c)** of the **coupling flange for mechanical fixing (45),** better described in figure (4a.2).

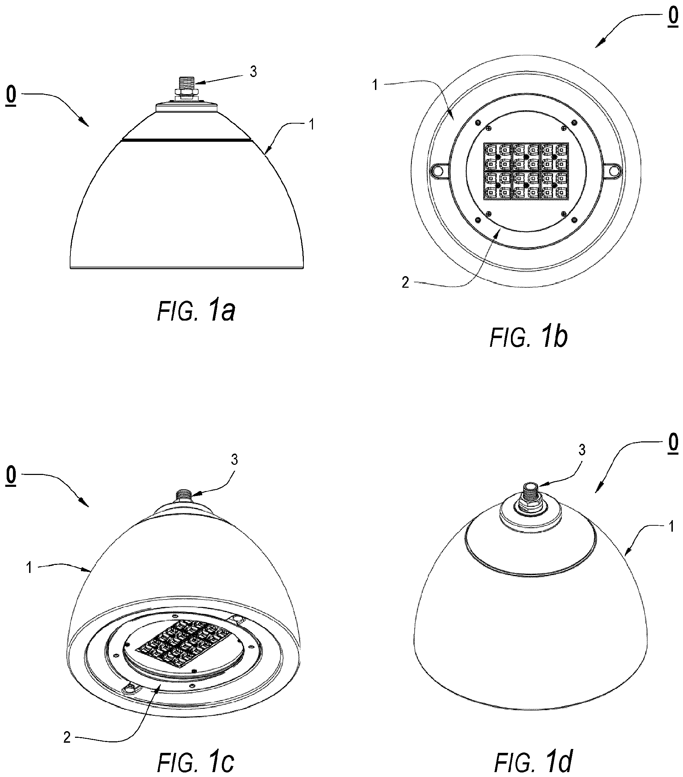

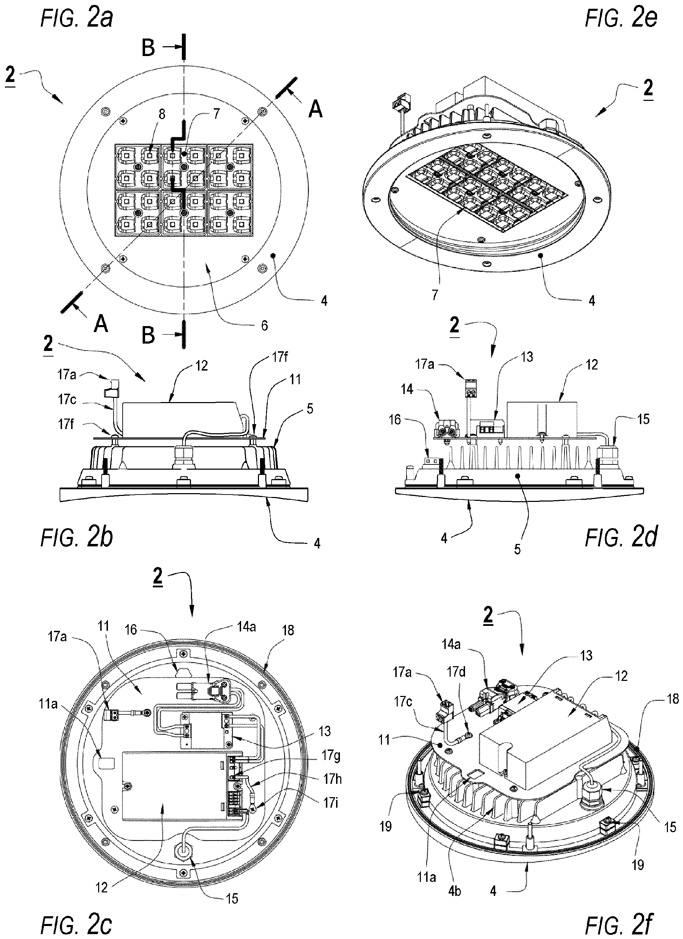

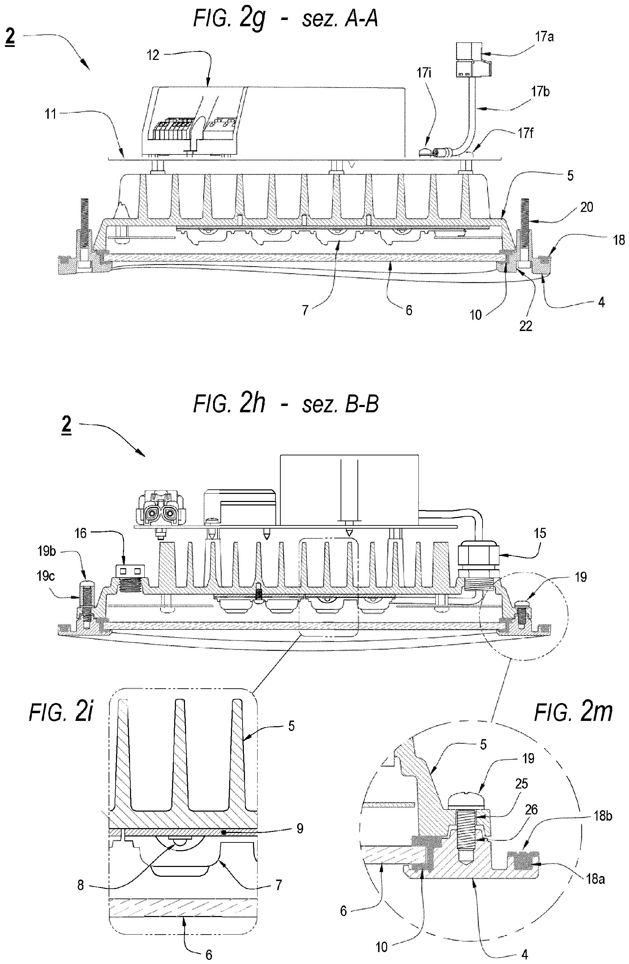

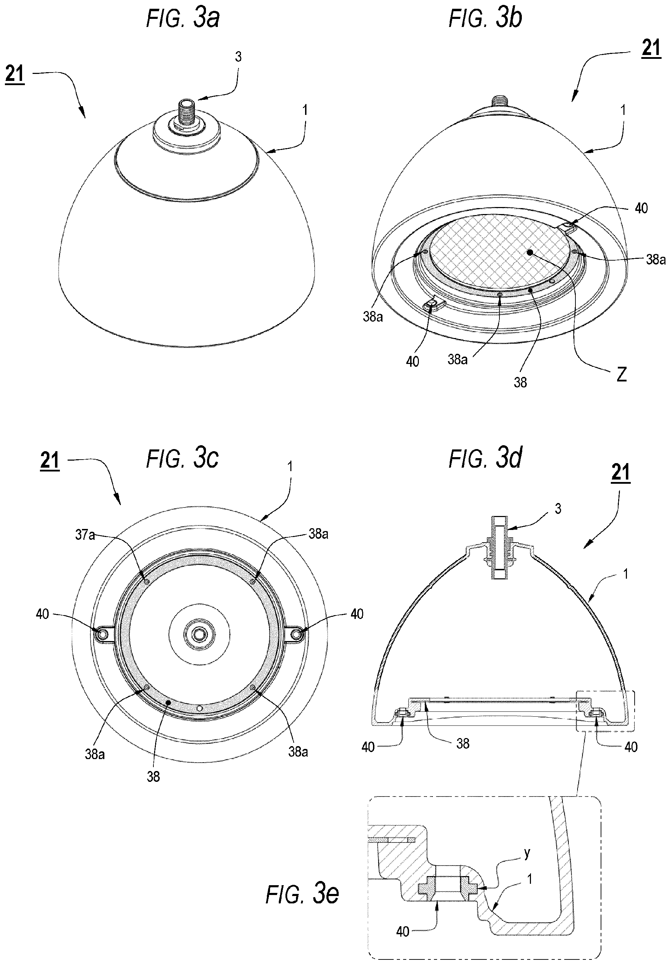

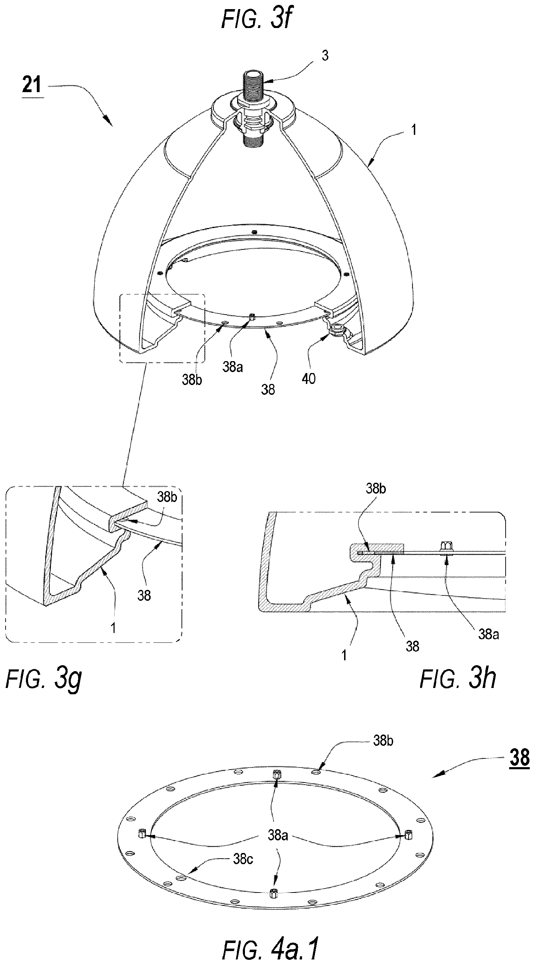

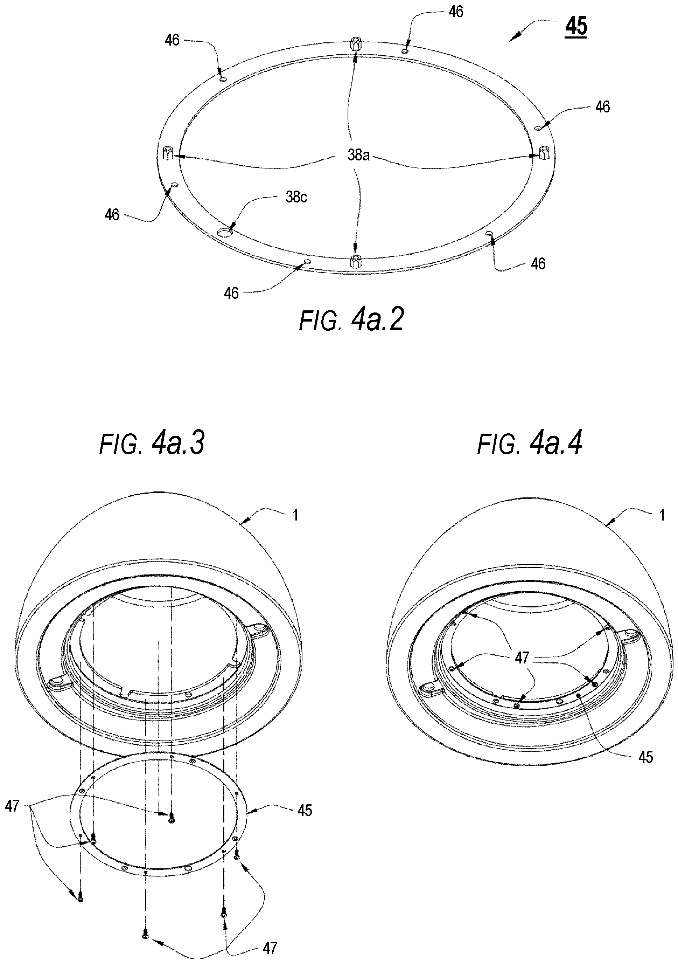

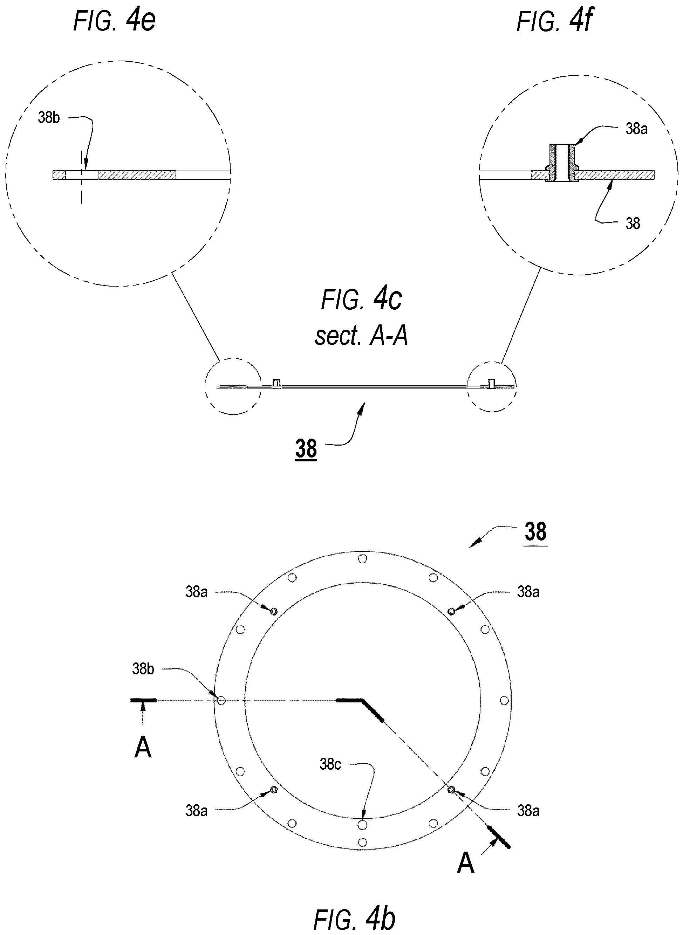

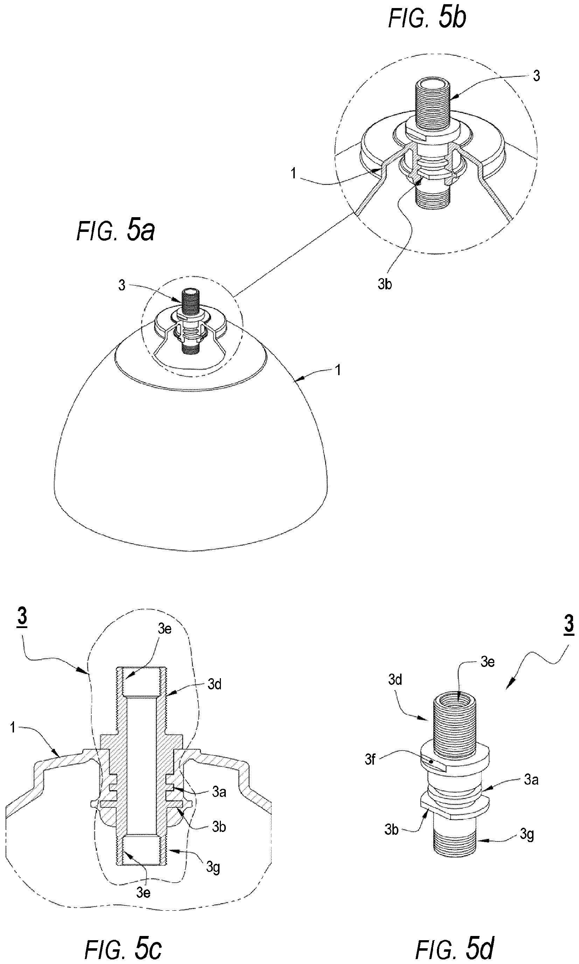

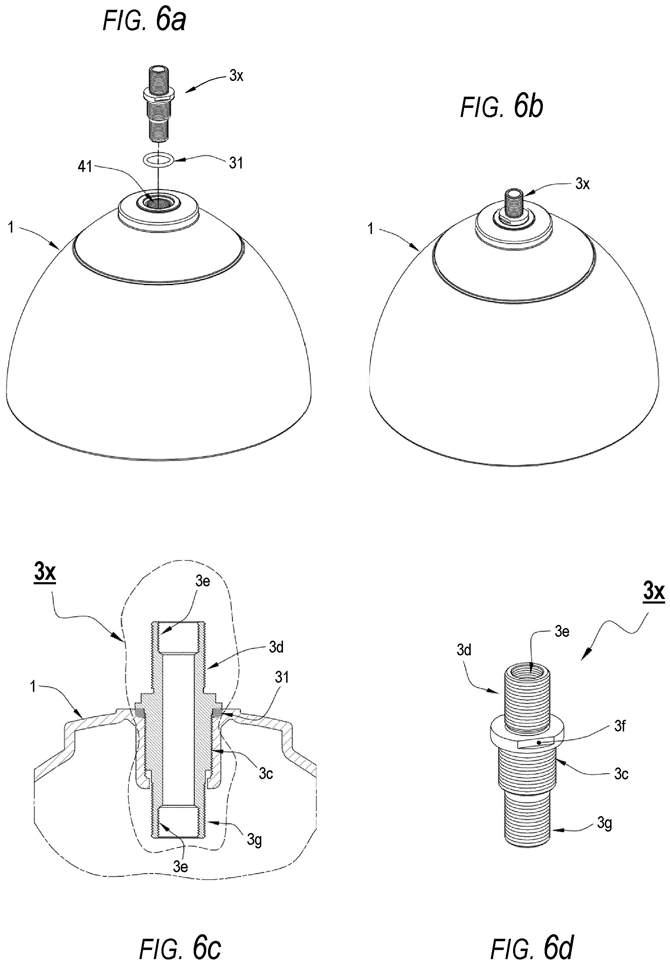

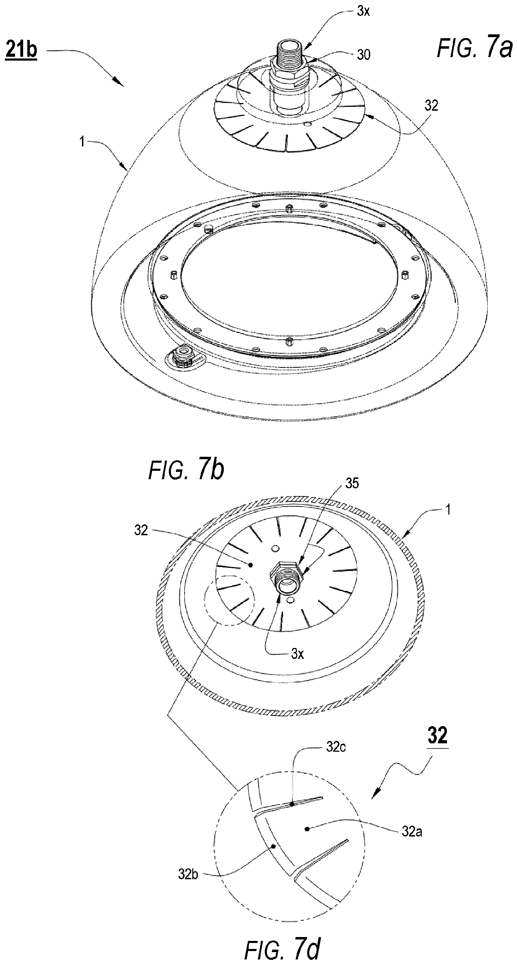

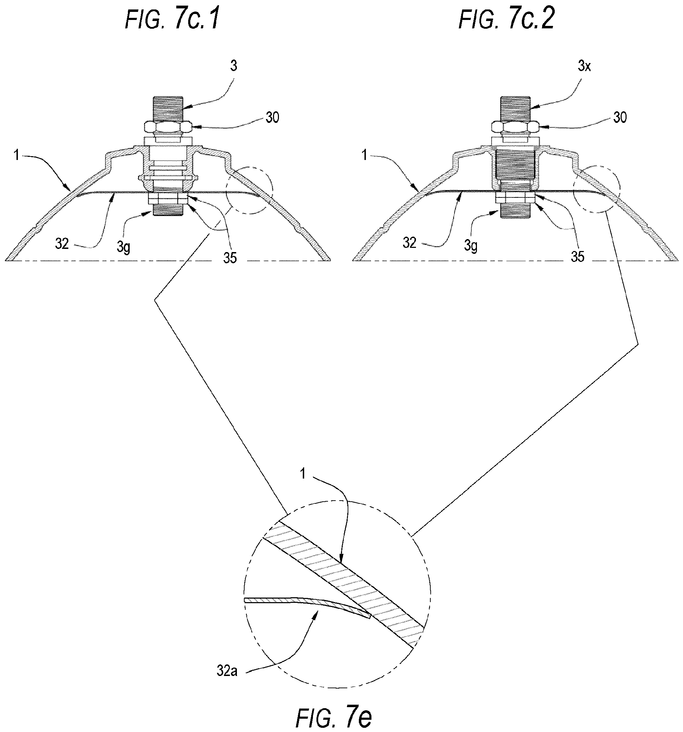

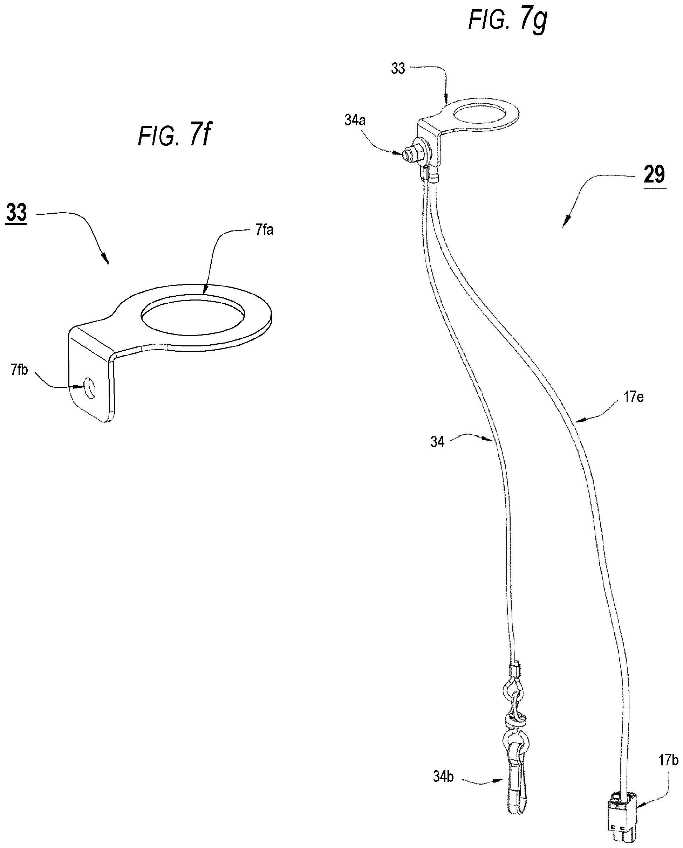

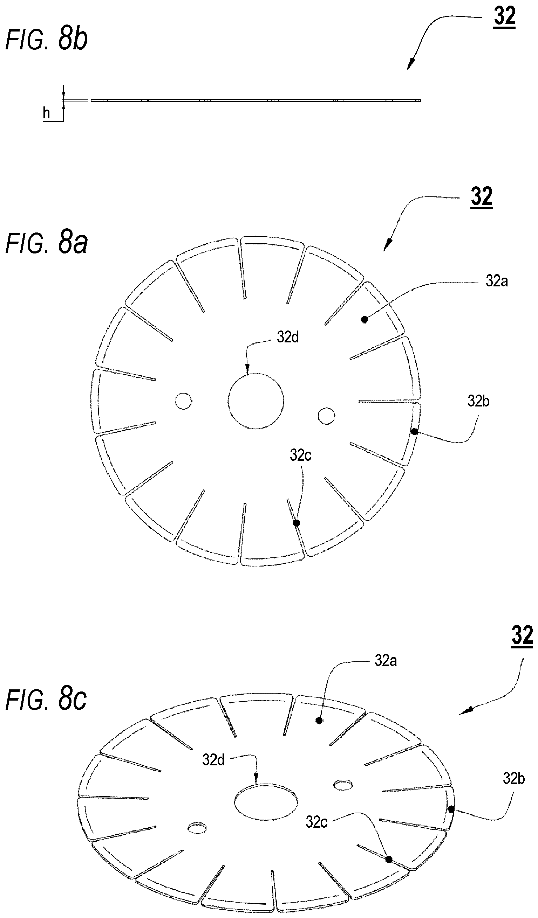

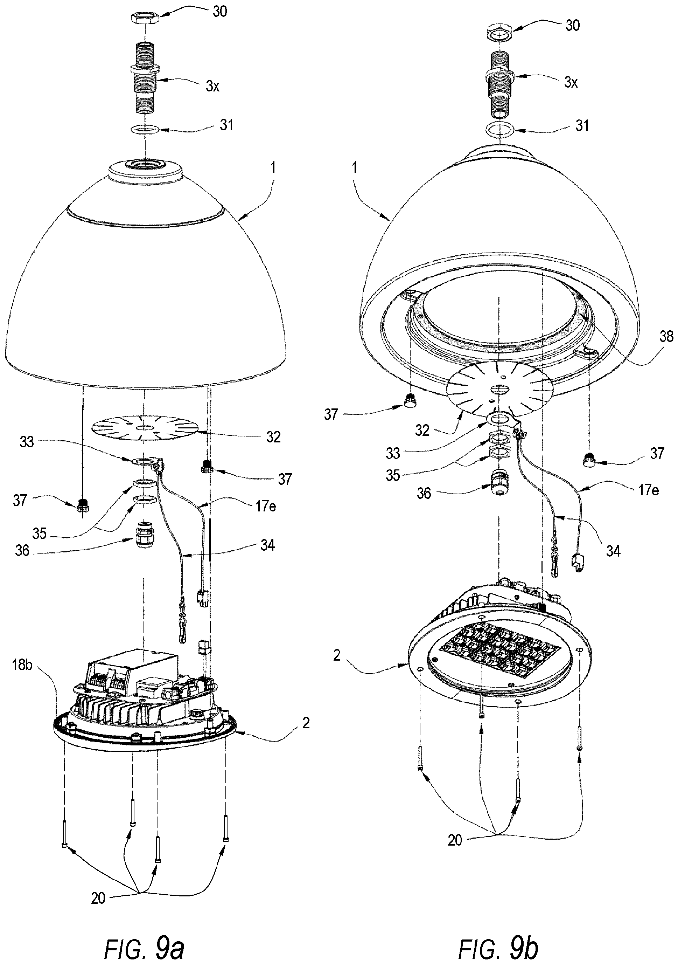

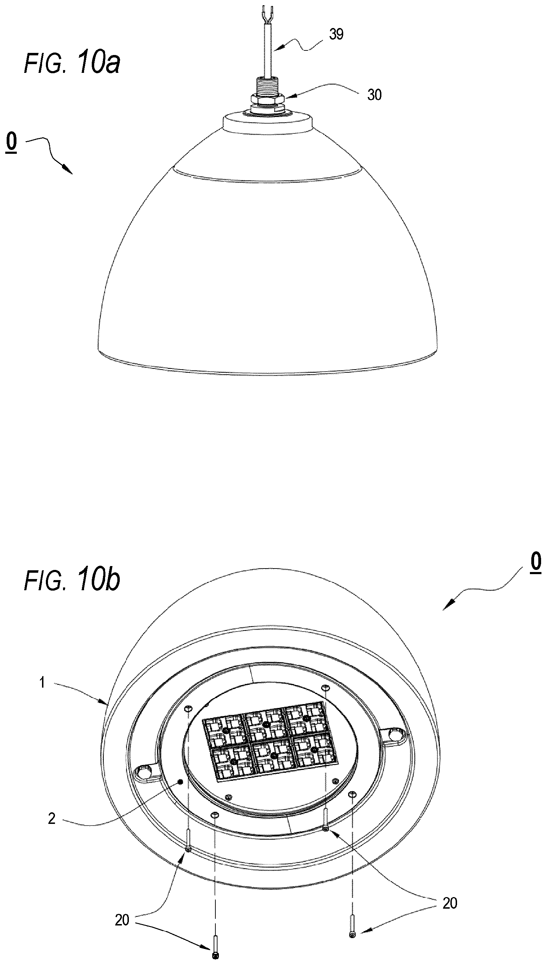

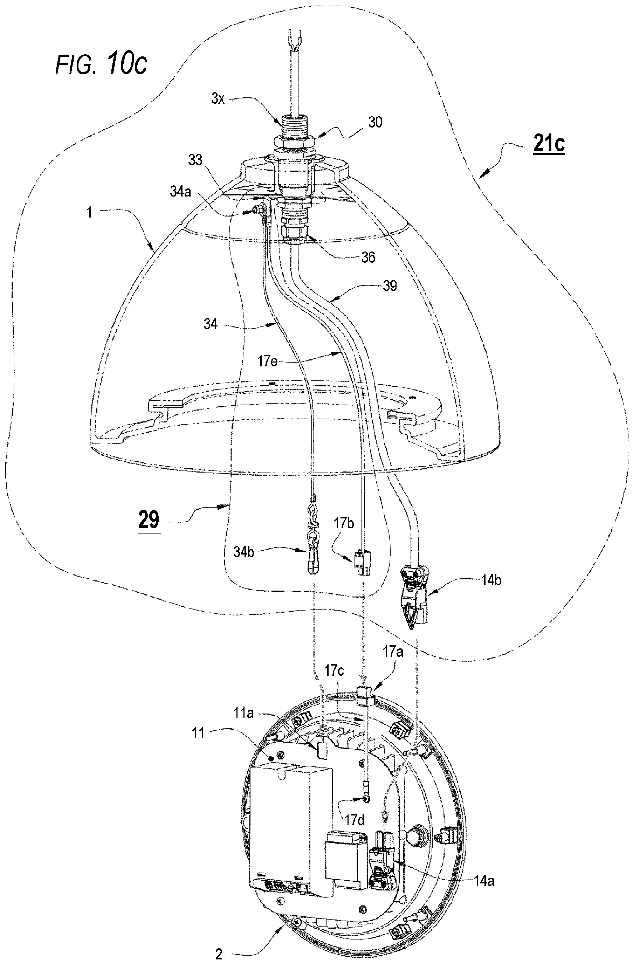

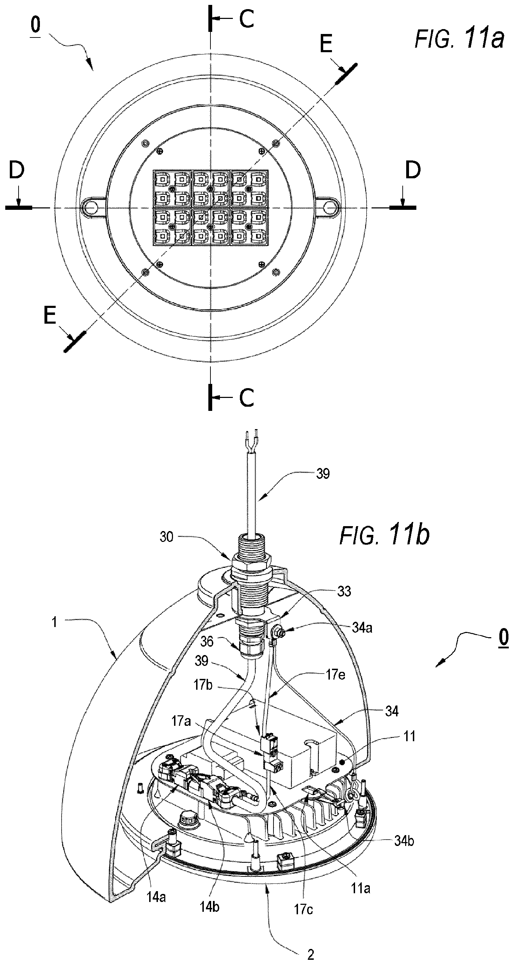

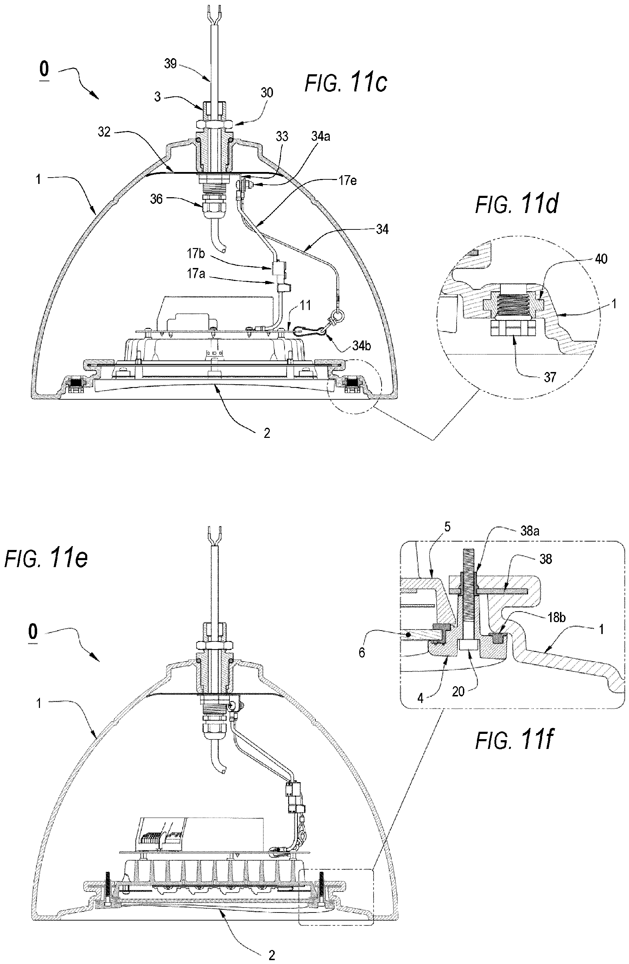

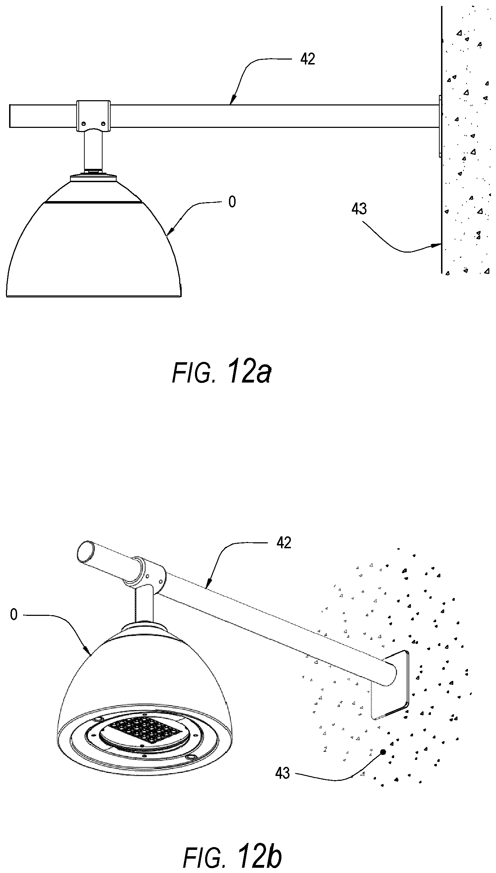

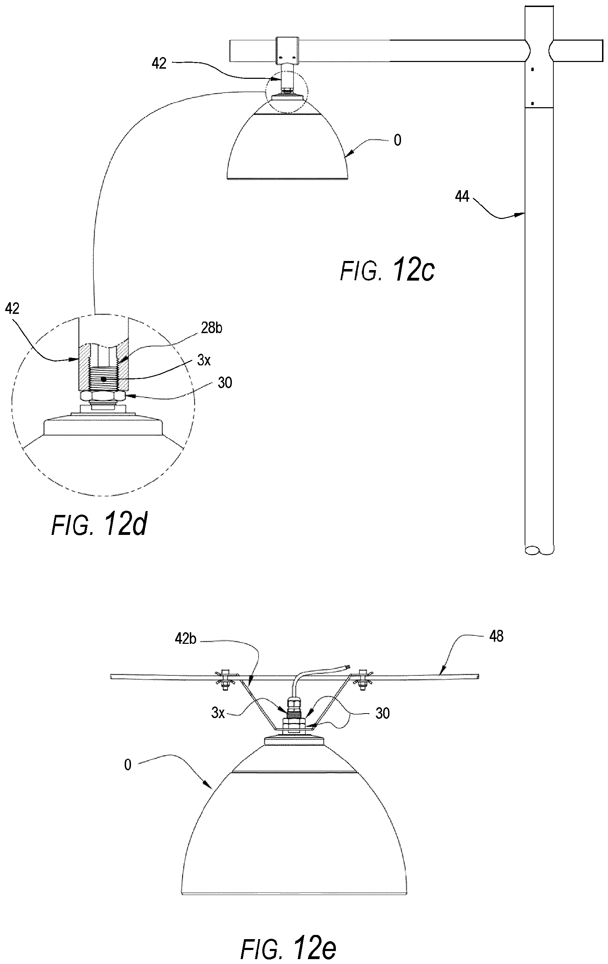

Figure **(2i****)** represents the detail of the cross section of the LED light source installed in the optical unit of the present invention in which the **electronic circuits (9)** are visible, containing the **LED chips (8)** possibly equipped with **collimators (7).** Said **circuits (9)** can be mechanically coupled by means of screws and/or rivets or by means of thermally conductive adhesive to the base of the **heat sink (5).** In the case of mechanical coupling, it is possible to place dissipating pastes or thermal PADs, not shown in the figure, between the **circuits (9)** and the **heat sink (5)** in order to increase the effectiveness of thermal transfer between the parts.

It should be noted that these electronic circuits are known and are therefore not described in detail since they are not the subject of the present invention. The boards can include individual LEDs or also other circuit electronic components for a power supply and/or control circuit of the LEDs.

In **the** **figure (2m****)** the section of the detail relating to the coupling between the **glass bead frame (4)** and the **heat sink (5)** is visible, in which both the **screw (19,** which creates the mechanical coupling between the **glass bead frame (4)** and the **heat sink (5),** and the presence of at least one **seat (18a),** obtained on the glass bead frame for a suitably shaped **gasket,** preferably silicone or polyurethane ( **18b),** can be noted. The scope of said **gasket (18b)** is to ensure the seal between the **optical unit (2)** and the **complete frame** (21c), as better described in **figure (11f****).** On the **glass bead frame (4)** there are also **through holes (22),** better detailed in **figure (2g****),** preferably shaped through the counterboring process, which represent the seats for housing the **screws (20)** suitable for making the mechanical connection of the **optical unit (2)** to the **frame (21),** better described in **figures (11e)** and **(11f****).**

The **figures (3a, 3b, 3c****)** illustrate overall external views of a possible realization of the frame of the present invention in which the **cover (1)** can be distinguished, to which the **pole connection fitting (3)** is applied, better detailed in the **figures (5c**, 5d). In the **figures (3b, 3c, 3d, 3e****)** the **threaded insert (40)** and the **coupling flange (38)** are visible, better described in figure (4a.1). Said **threaded insert (40)** has the purpose of forming the seat for the **anti-condensation valve (37),** better detailed in **figure (11d****).** Said **anti-condensation valve (37)** has the purpose of quickly equalizing the pressure inside the hermetic compartment created between the **optical unit (2)** and the **complete frame (21c)** equipped with the **cable gland (36),** better detailed in **figure (11c****),** preventing the formation of condensation in said compartment and at the same time the entry of water and contaminants.

In the **figure (3d****) is shown** the cross-sectional view of the **frame (21)** in which the co-molding coupling with the **cover (1),** the **threaded insert (40),** the **pole attachment fitting (3)** and the **coupling flange (38).**

Figure **(3e****)** represents the detail of the cross section of the **threaded insert (40),** co-molded to the **cover (1).** In **figure (3e****)** they are also visible the **projections (y),** with anti-rotation geometry (not shown in the figure), supplied with the **threaded insert (40),** whose scope is to facilitate the passage of the molten polymer in the molding phase of the **cover (1),** for being able to secure the **threaded insert (40)** to the **cover (1)** in a stable and long-lasting manner during the post-molding cooling phase.

Figure **(3f****)** represents an expoded sectional view of the frame of the present invention in which the **coupling flange (38),** the **threaded insert (40),** the **pole connection fitting (3)** are visible, all co-molded with the **cover (1).**

The **figures (3d**, 3h) represent sectional views of the detail relating to the co-molding coupling between **the cover (1)** and **the coupling flange (38)** in which the **embedding holes (38b)** obtained on the **coupling flange (38)** are visible. The scope of said **embedding holes (38b)** is to facilitate the passage of the molten polymer in the molding phase of the **cover (1)** in order to be able to ensure, in the post-molding cooling phase, in a stable and long -lasting manner, the **coupling (38)** to the **cover (1).** In **figure (3h****)** one of the **metal inserts (38a)** is also visible, better detailed in **figure (4f),** obtained on the **coupling flange (38).** The **metal inserts (38a)** are designed to accommodate the **screws (20),** better detailed in **figure (9b****),** suitable for making the mechanical connection of the **optical unit (2)** to the **frame (21)** .

Figure (4a.1) represents a trimetric view of the **coupling flange (38)** in which the **embedding holes (38b),** the **centering and/or abutment hole (38c)**, and the **threaded inserts (38a)** are visible. In an alternative embodiment, said **embedding holes (38b)** can be replaced by **fixing holes (46)** whose shape is suitable to allow the fixing of the coupling flange on the **cover (1)** by means of a screwed connection, preferably using **self-tapping screws (47),** as described in figures (4a.3) and (4a.4).

Figure (4a.2) represents a trimetric view of the **coupling flange for mechanical fixing (45)** in which the **fixing holes (46),** the **centering and/or abutment hole (38c)**, the **threaded inserts (38a)** are visible.

Figure (4a.3) represents an exploded view relating to the coupling of the **coupling flange for mechanical fixing (45)** to the **cover (1),** preferably by means of the **self-tapping screws (47)** introduced through the **fixing holes (46)** present on the **coupling flange for mechanical fixing (45)** and screwed onto the **cover (1).**

The **figures (4b, 4c, 4e, 4f****)** represent the cross section of the **coupling flange (38)** in which the details of the **embedding hole (38b)** and the **insert are visible metallic (38a) .**

Figure **(5d****)** represents a trimetric view of the **pole connection fitting (3)** for co-moulding in which the **anti-extraction projection (3a)** and the **anti-rotation projection (3b)** are visible. The scope of said **projections (3a)** and **(3b)** is to facilitate the passage of the molten polymer in the molding phase of the **cover (1)** in order to ensure, in the post-molding cooling phase, the connection in a stable and long-lasting manner of the **pole connection fitting (3)** to the **cover (1).** In particular, the geometry of the **anti-rotation projection -3b** is characterized by 2 rectilinear recesses with respect to the circular perimeter with the aim of hindering, in contrast to the polymer constituting its seat, any movement, both rotational and transversal. Alternatively to the **pole connection fitting (3),** coupled to the **cover (1)** for co-moulding, it is possible, according to the present invention, to use the **pole connection fitting for screwing (3x),** better detailed in **figure (6d****),** and fixed to the **cover ( 1)** by screwing it into the **thread (41)** obtained on the **cover (1),** as detailed in **figure (6a****).**

The **pole connection fitting for screwing (3x)** and the **pole connection fitting (3)** share the geometry of the **thread (3d)** and the **thread (3g)** better described in the **figure (5d****)** and the **threaded seats (3e),** better detailed in **figure (5c****).**

In **figure (5d****)** the **thread (3d)** is also visible, which is also in common to the **pole connection fitting (3x),** intended for the screwed coupling of the **pole connection fitting (3)** to an external mechanical support element, such as a shelf, better detailed in **figure (12b****)**, or to an **interface bracket (42b)**, as detailed in **figure (12e****).** A **nut (30)** is also screwed onto the **thread (3d)** to lock the orientation of the **lighting device (0)** which is the subject of the present invention. The function of said **nut (30),** once tightened compared to the threaded seat of the **external mechanical support (42),** as detailed in **figure (12d****)**, or with respect to an **interface bracket (42b)**, as detailed in **figure (12e****),** is to prevent any relative rotation between **the appliance (0)** and the **external mechanical support (42)** or alternatively with respect to the **interface bracket (42b).**

In **figure (5d****)** the **thread (3g)** is also visible, which is also in common to the **pole connection fitting (3x)**, intended for coupling the **spring disc (32),** better detailed in **figure (8a****),** to the **cover (1)** by means of one or more **fixing ring nuts (35),** as detailed in figure (7c.1). Said **fixing ring (35),** once tightened with respect to the **spring disc (32),** forces the **flexible fins (32a)** of the **spring disc (32),** detailed in **figure (7d****),** to conform to the internal geometry of the **cover (1),** as can be seen in **figure (7e****).** In this way the **disc springs (32),** improves the effectiveness of the support offered by the **pole connection fitting (3)** or, alternatively, from the **pole connection fitting (3x),** allowing to reduce the deformation of the **cover (1)** and, therefore, its compliance under the action of the pressure of the wind and its own weight. Furthermore, the **spring disc (32)** helps to better distribute the state of stress in the area close to the constraint represented by the **pole connection fitting (3)** or, alternatively, from the **pole connection fitting (3x),** thus improving the overall mechanical behavior of the **lamp (0)** .

The action of the **spring disc (32)** therefore allows reaching a good compromise between resistance and weight of the **device (0),** with a view to reducing the quantity of polymeric material used in the manufacture of the **cover (1).**

In **figure (5d****)** the pair of **transversal grooves (3f)** are also visible, useful for fixing the **device (0)** to an **external mechanical support (42),** better represented in **figure (12d).**

Figures **(5a**, 5b) represent the split section views of the co-molding coupling of the **pole connection (3)** in which the detail of the **anti-rotation projection (3b)** is visible.

Figure **(5c****)** represents a sectional view of the **pole connection fitting (3)** molded with the **cover (1)** in which the **threaded seats (3e) are visible,** also common to the **pole connection fitting (3x)**, suitable for hosting a suitable **cable gland element (36),** better detailed in **figure (10c****).**

Figure **(6d****)** represents a trimetric view of the **pole attachment fitting for screwing (3x),** in which the **thread (3d)** intended for the screwed coupling of the **pole attachment fitting (3x)** with respect to an external mechanical support element is visible, better detailed in **figure (12d****),** or to a **connection bracket (42b),** as detailed in **figure (12e****).** One or more nuts (**30)** are also screwed onto the thread **(3d)** to lock the orientation of the **lighting device (0)** which is the subject of the present invention. The function of said **nut (30),** once tightened with respect to the threaded seat of the **external mechanical support (42)** or with respect to an **interface bracket (42b)**, is to prevent any relative rotation between the **device (0)** and the **external mechanical support (42)** or **interface bracket (42b).**

In **figure (6d****)** it is shown the **thread (3c)** suitable for the mechanical coupling, better detailed in **figure (6a****),** of the **pole connection fitting (3x)** on the **thread (41)** of the **cover (1),** placing a or more **ring seals (31),** preferably shaped as an elastomer ring with a circular section.

Also visible in **figure (6d****)** is the **thread (3g)** intended for coupling the **spring disc (32)** to the **cover (1)** by means of one or more **fixing ring nuts (35),** as detailed in figure (7c.2). Said **fixing ring (35),** once tightened with respect to the **spring disc (32),** forces the **flexible fins (32a)** of the **spring disc (32),** detailed in **figure (7d****),** to conform to the internal geometry of the **cover (1),** as can be seen in **figure (7e****).** In this way the **spring disc (32)** improves the effectiveness of the support offered by the **pole connection fitting (3x),** allowing to reduce the deformation of the **cover (1)** and, therefore, its compliance under the action of wind pressure and of its own weight. Furthermore, the **spring disc (32)** helps to better distribute the state of stress in the area close to the constraint, thus improving the overall mechanical behavior of the **lamp (0).**

The action of the **spring disc (32)** therefore allows reaching a good compromise between resistance and weight of the **device (0),** with a view to reducing the quantity of polymeric material used in the manufacture of the **cover (1).**

In **figure (6d****)** the pair of **transversal grooves (3f)** are also visible, useful for fixing the **device (0)** to an **external mechanical support (42),** better represented in **figure (12d).**

Figure **(6c****)** represents the cross-sectional view of the configuration in which the **pole connection fitting (3x)** is screwed to the **cover (1)** using the **thread (3c),** where it is visible the **ring gasket (31)** in its state of compression following the screwing and tightening of the pole connection **fitting (3x)** in the **threaded seat (41),** better detailed in **figure (6a****),** of the **cover (1).**

Figure **(6b****)** represents a trimetric view of the **pole connection fitting (3x)** screwed to the **cover (1)** of the present invention.

Figure **(6a****)** illustrates an exploded trimetric view of a possible composition for screwing the **pole connection fitting (3x)** to the **cover (1)** of the present invention. In **figure (6a****)** is it visible the **threaded seat (41)** made on the **cover (1)** for the purpose of mechanically coupling the **cover (1)** with the **pole attachment fitting (3x)**, with the **ring gasket (31) placed in between.**

Figure **(7a****)** illustrates a trimetric view of the **frame with spring disc (21b)** in which the **spring disc (32)** coupled by means of one or more, preferably two, **ring nuts (35)** to the **pole attachment fitting (3x)** is visible.

Figure **(7b****)** represents the view, according to a section plane such as to highlight the detail relating to the coupling of the **spring disc (32)** with respect to the **pole attachment fitting (3x)** by means of screwing one or more **ring nuts (35),** preferably two, on the same **pole connection fittings (3x).**

Figure (7c.2) represents the cross-section view of the detail relating to the coupling of the **spring disc (32)** to the **pole attachment fitting (3x).** In figure (7c.2) the de**formation of the fins (32a)** of the **spring disc (32)** is visible following the tightening of one or more **ring nuts (35),** preferably two, on the **thread (3g)** obtained on the **pole connection fitting (3x).** In a preferred embodiment, as visible in **figures (9b****)** and **(****11b****)**, between the **ring nuts (35)** and the **spring disc (32), a metal support (33)** for the **safety cable (34)** is inserted, better described in **figure (7f****).**

Figure **(7f****)** illustrates the detail relating to the **metal support (33)** for the **safety cable (34),** characterized by a **central hole (7fa)** with a diameter sufficient to be tightened with respect to the **spring disc (32),** by the **ring nuts (35)** once inserted concentrically through the **threaded stem (3g)** of the **pole connection fitting (3x)** or, alternatively, of the **pole connection fitting (3).** On said **metal support (33)** a **second hole (7fb)** is preferably made, useful for fixing, as better detailed in **figure (7g****),** via **screwed connection (34a),** both a preferably eyelet terminal of the **safety cable (34)** and both of a cable lug of the **equipotential cable (17e).**

Figure **(7g****)** illustrates the detail relating to the **mechanical and equipotential restraint kit (29)** in which the **safety cable (34)** secured at one end, preferably equipped with an eyelet terminal, by a **screwed connection (34a),** to the **hole can be distinguished (7fb)** obtained on the **metal support (33),** while the second end is hooked to the metal hook with closure using a **spring lever (34b).** Preferably using the same **screwed connection (34a)**, the terminal of the **equipotential cable (17e) is secured,** to the opposite end of which the **equipotential connector (17b) is connected.**

Figure **(7d****)** illustrates the detail relating to the shape of the **spring disc (32)** with the detail of the **fin (32a)** .

Figure **(7e****)** illustrates the cross-section detail relating to the **fin (32a)** of the **spring disc (32)** shaped with respect to the **cover (1)** following the tightening of one or more **ring nuts** (**35),** preferably two, on the **thread (3g)** obtained on the **pole connection fitting (3x).**

**Figure (8a****)** represents the plan view of the **spring disc (32),** preferably with flat geometry, in which the **peripheral radial notches (32c)** are visible, obtained along the radial direction of the **spring disc (32).** Said **notches (32c)** give rise to the **fins (32a)** which have the purpose of making the peripheral part of the **spring disc (32)** flexible and deformable under the action of a force acting on the **edge (32b)** of the **fin (32a),** and transverse to the plane in which the **figure (8a****) lies.**

**Figure (8b****)** represents the side view of the **spring disc (32),** in which the thickness h is preferably constant and two orders of magnitude, at least, smaller than the external diameter.

**Figure (8c****)** represents the trimetric view of the **spring disc (32)** in which the **hole (32d)** concentric with the **spring disc (32)** is visible. Said **hole (32d)** is suitable for hosting the **threaded stem (3g)** of the **pole connection fitting (3x),** or alternatively, of the **pole connection fitting (3)** as can be seen in figures (7c.1) and (7c.2).

**Figures (9a**, 9b) illustrate the exploded trimetric views of a possible composition of the object of the present invention in which are visible the **cover (1),** the **spring disc (32),** the **metal support (33),** the **safety cable (34),** the **equipotential cable (17e),** the **ring nuts (35),** the **cable gland (36),** the **optical unit (2),** the **gasket (18b)** of the **glass retaining frame (4)** of the **optical unit (2),** the **screws (20)** suitable for making the mechanical connection of the **optical unit (2)** to the coupling flange **(38)** or **(45)** to the **cover (1),** the **anti-condensation valves (37),** the **O-ring (31),** the **pole connection fitting for screwing (3x)** and the **locking nut (30).**

Figure **(10a****)** illustrates a side view of the final configuration of the present invention in which the **power cable (39)** of the **lighting appliance (0)** is visible.

Figure **(10b****)** illustrates a partially exploded trimetric view where the **screws (20)** suitable for making the mechanical connection of the **optical unit (2)** to the **coupling flange (38)** or **(45)** to the **cover (1)** are visible. This screwed connection allows you to easily remove the **optical unit (2)** to carry out the installation and/or repair and/or update and/or regeneration and/or upgrade operations thereof.

In **figure (10c****)** it is shown the **optical unit (2)** still electrically and mechanically decoupled from the **complete frame (21c).** Said **complete frame (21c)** is made starting from the **frame with spring disc (21b),** described in **figure (7a****),** completed with the connection systems represented by the **connection cable to the electrical network (39),** passing through the **cable gland (36)** and connected to the **electrical power connector (14b)**, from the **mechanical and equipotential retention kit (29).** Said connection between the **equipotential connection cable (17e)** and **the metal support (33)** must guarantee, once the latter has been tightened to the **spring disc (32)** using the **ring nuts (35),** the electrical continuity between the **pole connection fitting (3x),** or alternatively **(3),** and the **equipotential connector (17b).** This electrical continuity is necessary to ensure an equipotential connection between all the electrically conductive parts of the **appliance (0).**

The equipotential connection created by coupling the **connector (17b)** of the **complete frame (21c)** to the **connector (17a)** of the **optical unit (2),** is used to keep all the conductive parts exposed such as the **glass bead frame (4)** and the **connection fitting pole (3x)** or, alternatively, the **pole connection fitting (3),** substantially at the same potential. In the absence of said equipotential connection, due to disturbance phenomena which may be of an electrostatic nature (ESD) generated by the action of the wind or deriving from electrostatic discharges of an atmospheric nature, an electrical potential difference (ΔP) could be generated between the aforementioned electrically conductive enough to cause dangerous electric shocks, both for the operator and for electronic devices such as **LEDs (8)** and **drivers (12).** Such shocks could give rise to unwanted current flow through paths that are not normally designed to carry current, such as between the **pole attachment fitting (3x)** and the **heat sink (5).** Said current flow would pass through the **MCPCB board (9)** connected to the **LEDs (8)** and the power supply section which houses the **driver (12),** and possibly the **SPD (13),** as visible in **figure (11e****),** causing consequent destructive situations for the **LEDs (8)** and **drivers (12)** themselves. To achieve high levels of immunity, the **driver (12),** via the **EQUI terminal (17g)**, visible in **figure (2c****),** must be connected to the **heat sink (5),** in any insulation class configuration (in the case of Insulation class I, all metal parts and the **EQUI terminal (17e)** must necessarily also be connected to earth including the class I SPD).

This will ensure the peak immunity levels specified by the relevant industry standards in order to protect the driver and LED module from damage from overvoltage and/or accumulation of electrostatic charges.

The **figures (11a, 11b****,** **11c, 11d, 11e****)** represent the sectional views of a possible configuration of use of the present invention in which both the electrical and mechanical connections made between the **complete frame (21c)** of the **figure (10c****)** and the **light unit (2)are** visible). In **figure (11b****)** the electrical connection between the **equipotential bond connector (17b)** and the **connector (17a)** on the **optical unit (2)** is visible. The figure also shows the connection of the **electrical power connector (14b)** connected to the **connector (14a)** on the **metal plate (11)** of the **optical unit (2).** Furthermore, in **figure (11b****)** the mechanical safety connection made by means of the metal hook with closure by means of a **spring lever (34b)** hooked to the **slot (11a)** obtained on the **metal plate (11)** of the **optical unit (2)** is visible.. This **hook (34b),** once engaged with the **slot (11a),** allows avoiding accidental falls of the **optical unit (2),** whenever the fixing **screws (20)** are removed at a height.

Another purpose of the **hook (34b)** is to facilitate, during the installation phase, the mutual electrical connection between the **equipotential connection connectors (17a) and** (**17b)** and between the **electrical power connectors (14a) and** (**14b).**

Figure **(11d****)** represents the detail of the cross section of the **anti-condensation valve (37)** inserted in the **threaded insert (40)** co-molded to the **cover (1).**

Figure **(11f****)** represents the cross section of the detail of the mechanical system for attaching the **optical group (2)** to the **coupling flange (38)** made using the **screws (20)** which, through the **bladed hole (22)** present on the **frame glass bead (4),** engages with the **threaded inserts (38a)** present on the coupling flange **(38)** of the **complete frame (21c).** The screwed connection between the **glass bead frame (4)** and the **complete frame (21c)** also achieves the compression of the **gasket (18b)** present on the **glass bead frame (4),** achieving the hermetic seal of the air volume enclosed inside the **cover (1).** The **anti-condensation valves (37)** allow the correct sealing of the **gasket (18b)** to be preserved, equalizing the pressure inside the **cover (1)** compared to the pressure outside the **appliance (0)** and reducing the occurrence of condensation phenomena, filtering the liquids and other contaminants outside, resulting in an increase in the performance, durability and reliability of the **lighting fixture (0)** .

The **valves (37),** as known to those skilled in the art, must be sized based on the volume of air enclosed inside the **appliance (0).**

Laboratory experiments have demonstrated that the thermal power of the **optical unit (2)** can be dissipated by convective motions inside the **cover (1),** whose volume is adjusted accordingly. Experimental evidence has demonstrated, in fact, the existence of a thermal field in which there is evident transport of hot air from the central area of the heat **sink (5)** upwards and colder air from top to bottom, an indication of a typical convective circulatory motion.

This volume of air, in particular, is proportional, in a non-linear manner, to the thermal power of the **optical unit (2**) **.** An increase in volume, in theory, always determines a reduction in the maximum temperatures on the **LED chips (8),** but only up to a limit beyond which the negligible increase in the thermal dissipation performance of the **LEDs (8)** of the **optical group (2**) does not justify a further increase in volume of the **cover (1**)**.**

From experimental evidence it has been demonstrated, by way of example, that for an electrical power of the **optical unit (2)** equal to 60 W, an internal volume of the **cover (1)** equal to 10 liters is necessary; for an electrical power of the **optical unit (2)** equal to 65 W, an internal volume of the **cover (1)** equal to 17 liters is required; for an electrical power of the **optical unit (2)** equal to 70 W, an internal volume of the **cover (1)** equal to 30 liters is required; for an electrical power of the **optical unit (2)** equal to 75 W, an internal volume of the **cover (1)** equal to 87 liters is required.

Furthermore, from experimental evidence it has been seen that the aspect ratio and/or the thickness of the **cover (1)** do not substantially affect the thermal performance of the **appliance (0).**

**Figures (12a, 12b****,** **12c****)** represent the views relating to the installation configuration of the object of the present invention in which the **pole attachment connection (3x)** or **(3)** which engages the **seat (28b)** present on the **wall shelf is visible (42)** fixed on the **wall (43**) or on an **external pole (44).**

**Figure (12e****)** represents the side view relating to the installation configuration of the object of the present invention in which the **interface bracket (42b)** is visible, represented by an attachment for **steel cable (48)** for installation on a stretcher, fixed to the **pole connection fitting (3x**)**,** or alternatively to the **pole connection fitting (3),** preferably using two **mechanical nuts (30).**

In a preferred embodiment the **cover (1)** is made of thermoplastic polymeric material and as such lends itself to being shaped using the rotational molding technique. The starting material can comprise, in a percentage up to 100%, polyethylene in powder form, a polymer that is becoming popular in recent times for its mechanical properties and high recyclability. This material is, in fact, 100% recyclable and highly resistant to abrasion, wear, chemical agents and impacts. Polyethylene powder can be obtained from the pulverization of extruded pellets with appropriate additives starting from virgin and/or recycled material. The virgin material can be of fossil origin or preferably of plant origin, where the ethylene used is of renewable origin, specifically from sugar cane. The additive process is useful in order to increase and/or improve the mechanical performance of the polymer resulting from the extrusion process and/or its immunity to degradation by ultraviolet rays.

The optimal dust particle has a size of approximately 300 um. In resins selected for rotational molding it is necessary to consider the apparent viscosity of the melt at low speeds. A polymer with a relatively low viscosity (high MFR) allows good surface reproduction even with large particles.

In an alternative embodiment, it has been demonstrated that it is possible to create the **cover (1)** by using powdered polymer, according to any type described above, mixed dry with recyclable polyolefin flakes, hereinafter referred to as flakes.

The recycled polyethylene flakes come from homogeneous mechanical recycling, and specifically are the result of fine grinding downstream of the grinding, washing and separation processes by type of material and color. Recycled polyethylene flakes can also be available in a selection of colors such as light blue, dark blue, green and clear.

The size of said flakes generally does not exceed 5 mm in length in both dimensions, while the thickness is generally equal to 1 mm. they are available, in a maximum quantity of 10%, flakes whose dimensions are, in both directions, up to 10 mm and thicknesses of 2 mm.

The main sources of these materials are the so-called "clean plastic waste" obtained from municipal, residential or industrial waste. Because these materials have been exposed, often for long periods, to the environment, they have markedly different physical and chemical properties than virgin material. In general, waste plastic has substantially lower tensile strength and poor flexural and thermal properties than virgin plastic. The selection of recycled materials can also contain, preferably up to a maximum of 15%, smaller quantities of one or more polymeric materials, also derived from recyclable waste, such as PVC (rigid or flexible), chlorosulphonated polyethylene, compounded (reinforced) and modified, unmodified or compounded polypropylene (modified-reinforced, alloy, blends) engineering plastics such as polyamides, polycarbonates, thermoplastic polyesters (PET PBT), ABS, polyphenylene oxide and polyacetals.

It has thus been shown that the LED lighting fixture with a frame made of polymeric material and a removable light source, with high mechanical resistance and low environmental impact, described according to the present invention, achieves the intended purposes and tasks, solving the problems of the prior art.

Numerous modifications can be made by those skilled in the art without departing from the scope of protection of the present invention. The scope of the claims, therefore, must not be limited by the illustrations or preferred embodiments shown in the exemplary description, but rather the claims must include all patentable novelty features deducible from the present invention, including all characteristics that would be treated as equivalent by those skilled in the art.

## Claims

1. LED lighting apparatus including:
an optical unit (2);
a cover (1) in which a coupling flange (38) is integrated to facilitate the mechanical coupling between the coupling flange (38) itself and the optical unit (2) by means of clamping members (20)
**characterized in that**
said optical unit (2) is removably attached to said coupling flange (38) and said cover (1) is made of polymeric material with a rotomolding process.

2. Apparatus according to claim 1 wherein the coupling flange (38) is coupled to the cover (1) by co-moulding.

3. Apparatus according to claim 2, wherein the coupling flange (38) is **characterized by** one or more embedding holes (38b) through which bridges of polymer material extend which connect the material le of the polymer on two opposite sides of said flange thanks to the passage through them of the melted polymer in the co-molding phase of the cover (1) in order to be able to form retention blocks and ensure, in the post-molding cooling phase, a stable and lasting , the coupling flange (38) to the cover (1).

4. Apparatus according to one or more of the preceding claims, in the cover (1) of which is integrated a fitting for coupling to a pole, preferably with a cylindrical shape, for attaching the apparatus (0) with respect to an external support, **characterized by**:
- one or two, preferably two, internal seats with a cylindrical geometry and threaded (3e), of which one on the upper top and one on the lower one, suitable for housing a cable gland element (36);
- a thread (3d), made starting from the external surface of said coupling fitting on the upper top of the same and which is intended for the screwed coupling of said coupling fitting to a pole provided with an external mechanical support element, such as a bracket with a threaded hole or a connection bracket and by means of one or more mechanical tightening nuts;
- two or more transversal grooves (3f), useful for attaching the apparatus (0) to an external mechanical support (42), by means of a suitable operating key.

5. Apparatus according to claim 4, wherein the mechanical attachment, represented by the connection fitting to a pole (3), is co-molded on the cover (1) and is **characterized by** one or more anti-slip protrusions (3a) and by one or more anti-rotation ridges (3b) **characterized by** one or more ridges and/or recesses with respect to the circular perimeter and for opposing, in the post-moulding phase, against the polymer constituting its seat, any relative movement between the cover (1) and the coupling fitting to a pole, both rotational and transversal.

6. Apparatus according to claim 4 or 5, wherein the mechanical connection is **characterized by** a lower peripheral thread (3c) for its mechanical connection to the cover (1) by screwing, preferably by interposing between said details at least one O-ring (31).

7. Apparatus according to the preceding claims, comprising cover-reinforcement means in the form of a spring disc (32) and wherein the connection for coupling to a pole is **characterized by** an internal peripheral threaded seat (3g) intended for coupling said spring disc (32) with respect to the cover (1) by means of a fixing nut (35).

8. Apparatus according to claim 7, **characterized in that** said spring disc (32) has a flat geometry and radial radial notches, and is positioned or can be positioned inside the cover (1) in concentric position with respect to the thread (3g) of the coupling fitting to a pole, to which the cover (1) is fixed by means of one or more, preferably two, fixing ring nuts (35).

9. The apparatus according to the preceding claim 7 or 8, wherein the spring disc (32) is **characterized by** a thickness h which is constant and two orders of magnitude, at least, smaller than the outer diameter.

10. Apparatus according to one or more of claims 7 to 9, wherein, the spring disc (32) has a plurality of flexible external radial fins (32a) and, in the finished assembly condition, the fixing ring nut (35) has a relative position with respect to the internal surface of the cover (1) in which it is tightened on the spring disc (32) until the flexible fins (32a) conform with the internal geometry of the cover (1), in order to improve stress distribution due to forces external to the apparatus (0) close to the constraint.

11. Apparatus according to one or more of the preceding claims, **characterized in that** it is provided with at least one releasable mechanical restraint system and equipotential connection (29) of the optical unit (5) with respect to the complete frame (21c) .

12. Apparatus according to one or more of the preceding claims, wherein the optical unit (2) comprises a mechanical frame associated with at least one anti-condensation valve (16), at least one cable gland (15), an electronics support plate (11), and a glass (6), suitably shaped and equipped with a suitable shaped gasket (10), which glass (6) is inserted between a heat sink (5) and a glass stop frame (4).

13. Apparatus according to claim 12, wherein the glass bead frame (4) is **characterized by** two or more through holes (22), preferably shaped by counterbore machining, which represent the seats for housing screws (20) of mechanical connection of the optical group (2) to the connection flange (38) or (45) integrated in the cover (1), the glass bead frame (4) having two or more seats (18a), for a suitably shaped gasket to ensure sealing between the optical unit (2) and the frame (21).

14. Apparatus according to one or more of the preceding claims, the optical group of which (2) is **characterized by** a centering system (19c) with respect to at least one corresponding centering and/or abutment hole (38c) present on the coupling flange (38) or (45) of the cover (1) .

15. Method for assembling an apparatus according to one or more of the preceding claims by coupling an optical unit (2) to a coupling flange (38) or (45) present on an external cover (1), comprising the following steps:
- coupling of a metal hook (34b) with closure by means of a spring lever with respect to a slot (11a) on a metal plate (11) of the optical assembly (2);
- coupling of connectors (17a) and (17b) in order to realize the equipotential connection of the complete frame (21c), to a frame of the optical unit (2);
- coupling an electric power supply connector (14b) to a connector (14a) present on the metal plate (11) of the optical group (2);
- positioning of a centering system (19c) of the optical unit (2) with respect to a centering and/or abutment hole (38c) present on the coupling flange (38) or (45) of the cover (1);
- tightening of screws (20), through the countersunk holes (22) present on the glass bead frame (4), with respect to the threaded inserts (38a) present on the coupling flange (38) or (45) of the com- pletus (21c);
- checking the compression of a gasket (18b) present on a glass bead frame (4) in order to create the hermetic seal of the volume of air enclosed inside the cover (1).

16. Apparatus according to one or more of the preceding claims 12 to 14, wherein the electronic support plate (11) is **characterized by** a slot (11a) whose function is to represent the seat for anchoring a metal hook (34b), provided with closure by means of a spring lever, with a mechanical and equipotential retention system (29).

17. Apparatus according to one or more of the preceding claims 1 to 14 or 16, wherein the cover (1) is provided with one or more, preferably two, anti-condensation valves (37), to rapidly equalize the pressure inside the hermetic compartment defined between the optical group (2) and the frame (21) equipped with the cable gland (36) and tightened on the relative passing cable, preventing the formation of the phenomenon of condensation in said compartment and at the time the ingress of water and contaminants.
